# EUROPEAN PATENT APPLICATION

(11) **EP 2 824 749 A1**
(43) Date of publication of application: **14.01.2015**
(21) Application number: 13756995.0
(22) Date of filing: 05.03.2013
(51) Int. Cl.: H01M 10/04, H01M 4/02

(54) **LAMINATED-STRUCTURE BATTERY**

(30) Priority: 08.03.2012 JP 2012052048
(71) Applicant: Nissan Motor Co., Ltd, Yokohama-shi, Kanagawa 221-0023 (JP)
(72) Inventor: HIRAI, Tamaki, Atsugi-shi Kanagawa 243-0123 (JP); OHARA, Kenji, Atsugi-shi Kanagawa 243-0123 (JP)
(74) Representative: Osha Liang SARL
(86) International application number: PCT/JP2013/055897
(87) International publication number: WO 2013/133233

(57) **Abstract**

It is an object to provide a laminated-structure battery that is capable of suppressing output unevenness of the single cells on the inner side and the outer side and improving durability. In a battery that has at least a cathode, an anode, and an electrolyte layer and that has a laminated structure prepared by laminating at least three layers of single battery layers each prepared by opposing the cathode and the anode to each other with an interposal of the electrolyte layer, a laminated-structure battery being characterized by that, in a direction of lamination of respective single battery layers, a center portion is higher than an end portion in terms of at least one of a ratio of a cathode charge capacity to an anode charge capacity (charge A/C ratio) and a ratio of a cathode discharge capacity to an anode discharge capacity (discharge A/C ratio).

## Description

### TECHNICAL FIELD

The present invention relates to a laminated-structure battery as a type of electronic device that does work to the outside by an electrochemical action between electrons and ions. In detail, it relates to a laminated-structure battery, such as a laminated-type (laminated-structure) lithium ion secondary battery.

### BACKGROUND ART

In recent years, to cope with air pollution and global warming, there has been a strong demand for the reduction of carbon dioxide. In car industry, an expectation is concentrated on reducing carbon dioxide emission by introducing electric vehicles (EV) and hybrid electric vehicles (HEV). There has been an active development of motor-driving secondary batteries, which hold the key to practical application thereof.

Motor-driving secondary batteries are required to have extremely high output characteristics and high energies, as compared with those of consumer lithium ion secondary batteries used for cellular phones, notebook computers, etc. Therefore, lithium ion secondary batteries, which have the highest theoretical energies of all batteries, attract attention, and the development is now rapidly going on.

In general, a lithium ion secondary battery has a structure in which a cathode prepared by applying a cathode active material and the like using a binder on both surfaces of a cathode collector, and an anode prepared by applying an anode active material and the like using a binder on both surfaces of an anode collector, are connected with each other with an interposal of an electrolyte layer, and they are received in a battery cladding. For example, Patent Publication 1 discloses a laminated-structure lithium ion secondary battery (laminated-structure battery) prepared by alternately laminating 19 sheets of cathodes and 20 sheets of anodes with an interposal of electrolyte layers.

However, charge and discharge reactions of existing lithium ion secondary batteries of a laminated structure like Patent Publication 1 accompany heat generation. In large-size batteries like on-vehicle batteries in particular, there is used a laminated-structure battery prepared by laminating a plurality of single battery layers each prepared by opposing a cathode and an anode to each other with an interposal of an electrolyte layer. However, in large-size, laminated-structure batteries like such on-vehicle batteries, there is a risk of generating a large temperature difference between a lamination inner portion (a center portion in the direction of lamination) and a lamination end portion (an end portion in the direction of lamination) due to their large size, in contrast with small-size batteries of a winding structure generally used for cellular phones and mobile personal computers.

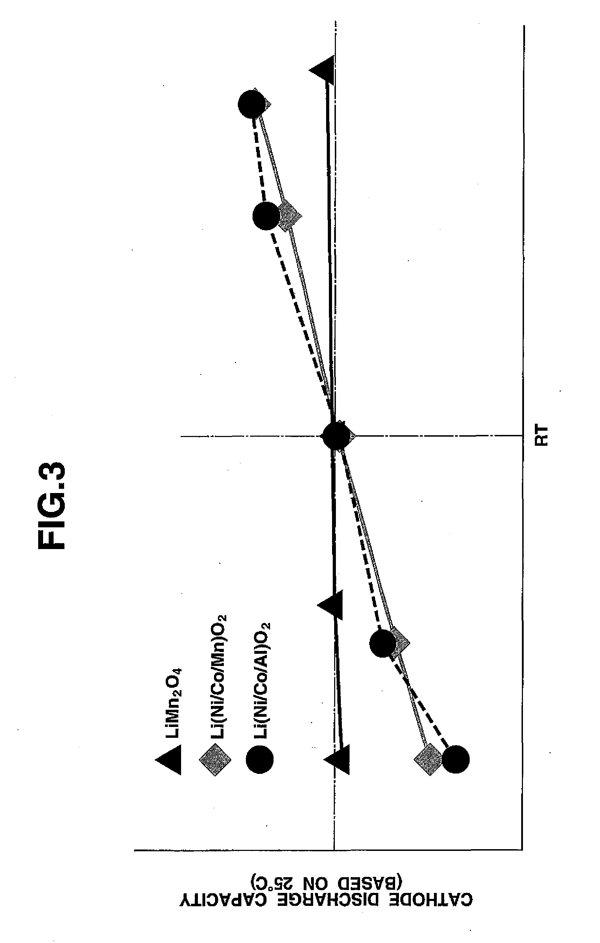

Furthermore, the present inventors have found that, in cathode active materials having a layered rock-salt structure like LiNiO₂ and Li(Ni, Co, Mn)O₂, due to the temperature dependency, battery characteristics are accompanied with a large unevenness under a heat-receiving condition caused by heat generation. From this, in laminated-structure batteries, particularly in large-size, on-vehicle batteries using a cathode active material of a layered rock-salt structure, the temperature tends to increase much more at a center portion in the direction of lamination. On the other hand, as being closer from a center portion in the direction of lamination to an end portion in the direction of lamination, the temperature lowers by heat radiation to the battery cladding and by heat radiation from the battery cladding to the outside of the system. Therefore, due to the temperature decrease by a heat radiation phenomenon of an end portion in the direction of lamination and the temperature increase by the battery temperature dependency of a center portion in the direction of lamination, the temperature difference between the center portion and the end portion in the direction of lamination becomes even larger, thereby causing an output unevenness between a single battery layer (single cell) at the center portion (inner side) and that at the end portion (outer side) in the direction of lamination. A mechanism to generate such output unevenness is considered as follows. As the temperature is higher, the charge and discharge capacity on the cathode side increases (see Fig. 3). With this, the capacity ratio (A/C ratio) of the anode capacity (Li discharge) to the cathode capacity (Li acceptance) decreases.

Herein, the ratio of the anode discharge capacity to the cathode discharge capacity upon discharge (after discharge) is referred to as discharge A/C ratio, and the ratio of the anode charge capacity to the cathode charge capacity upon charge (after charge) is referred to as charge A/C ratio. These capacity ratios change depending on properties and masses of their respective materials.

In case that the A/C ratio of the center portion becomes less than 1 as the difference of the movement of Li ions becomes large due to the temperature difference between the center portion (inner side) and the end portion (outer side) in the direction of lamination, Li precipitation occurs at an electrode of the center portion. As a result, it has been found that the electric currents between the electrodes of the laminated single battery layers of at least three become uneven, resulting in a risk of causing performance deterioration at an early stage and a risk of leading to lowering of durability.

It is an object of the present invention to provide a laminated-structure battery that is capable of suppressing output unevenness of the single cells at a center portion and an end portion and improving durability by making the A/C ratio at the center portion in the direction of lamination higher than the A/C ratio at the end portion.

### PRIOR ART PUBLICATION

### PATENT PUBLICATION

Patent Publication 1: Japanese Patent Application Publication 2009-272048

### SUMMARY OF THE INVENTION

The laminated-structure battery of the present invention is characterized by that, in the direction of lamination of single battery layers laminated by at least three layers, a center portion is higher than an end portion in terms of at least one of the ratio of the cathode charge capacity to the anode charge capacity (charge A/C ratio) and the ratio of the cathode discharge capacity to the anode discharge capacity (discharge A/C ratio). That is, it has a structure in which the A/C ratio of a single battery layer (single cell) at the center portion (inner side) in the direction of lamination (in the direction of thickness of the battery) is higher than the A/C ratio of a single battery layer (single cell) of the end portion (outer side).

According to the present invention, the A/C ratio is made to be higher as being closer to the center portion in the direction of lamination of each single battery layer (single cell) of the laminated-structure battery. Therefore, it is possible to suppress the output unevenness of the single cells of the center portion and the end portion to improve durability (life) of the battery even if the charge and discharge capacity of a cathode with a low heat radiation increases. That is, the A/C ratio is made to be higher as being closer to the center portion in the direction of lamination. Therefore, the difference between the effective A/C ratios at the center portion and the end portion in the direction of lamination is reduced. With this, it is possible to obtain an even output. As a result, it is possible to prevent the performance deterioration at an early stage and improve durability of the battery.

### BRIEF DESCRIPTION OF THE DRAWINGS

Fig. 1 is a schematic sectional view showing a basic structure of a laminated-type (flat-type) nonaqueous electrolyte lithium ion secondary battery as a typical embodiment of the laminated-structure battery;
Fig. 2 is a partial sectional view of the laminated-type (flat-type) nonaqueous electrolyte lithium ion secondary battery of Fig. 1;
Fig. 3 is a schematic graph showing the cathode capacity change using cathode active materials having temperature dependency and a cathode active material having no temperature dependency;
Fig. 4A is a plan view showing a condition in which an adhesive portion in the form of stripes has been formed on the surface of the electrode. Figs. 4B and 4C are plan views each showing a condition in which an adhesive portion in the form of dots has been formed on the surface of the electrode; and
Fig. 5 is a perspective view showing an external appearance of a flat lithium ion secondary battery as a typical embodiment of secondary batteries.

### MODE FOR IMPLEMENTING THE INVENTION

The laminated-structure battery of the present embodiment is characterized by that, in the direction of lamination of respective single battery layers in the battery, a center portion is higher than an end portion in terms of at least one of the ratio of the cathode charge capacity to the anode charge capacity (charge A/C ratio) and the ratio of the cathode discharge capacity to the anode discharge capacity (discharge A/C ratio). By such structure, it is possible to obtain the above-mentioned advantageous effect of the invention. Herein, the laminated-structure battery refers to a battery that has at least a cathode, an anode, and an electrolyte layer and that has a laminated structure prepared by laminating at least three layers of single battery layers each prepared by opposing the cathode and the anode to each other with an interposal of the electrolyte layer. In the present mode for implementing the invention, unless particularly stated, at least one of the ratio of the cathode charge capacity to the anode charge capacity (charge A/C ratio) and the ratio of the cathode discharge capacity to the anode discharge capacity (discharge A/C ratio) is simply abbreviated as A/C ratio, too.

As a preferred embodiment of the laminated-structure battery, a laminated (laminated structure) nonaqueous electrolyte lithium ion secondary battery is explained, but it is not limited to only the following embodiment. In the explanation of the drawings, the same element is designated by the same symbol, and the repetitive explanation is omitted. The dimensional ratios of the drawings are exaggerated for the reason of explanation. Therefore, they may be different from the actual ratios.

It is preferable to apply the laminated (laminated structure) lithium ion secondary battery of the present embodiment to large-size batteries like on-vehicle batteries in particular. It is, however, not limited in terms of size and use of the battery. It is applicable to laminated-structure lithium ion secondary batteries, which are publicly known hitherto and used for arbitrary sizes and uses.

Even in the case of making a distinction of the laminated (laminated structure) lithium ion secondary battery of the present embodiment with respect to the form of the electrolyte, there is no particular limitation. It is applicable to any of, for example, liquid electrolyte batteries prepared by impregnating the separator with a nonaqueous electrolyte, polymer gel electrolyte batteries, which are also referred to as polymer batteries, and solid polymer electrolytes (all solid electrolyte) batteries. In the present embodiment, with respect to polymer gel electrolytes and solid polymer electrolytes too, it is possible to use ones prepared by impregnating separators with these polymer gel electrolytes and solid polymer electrolytes.

In the following explanation, non-bipolar (internal parallel connection type) laminated (laminated structure) lithium ion secondary batteries are explained by using the drawings, but they should not be limited to these.

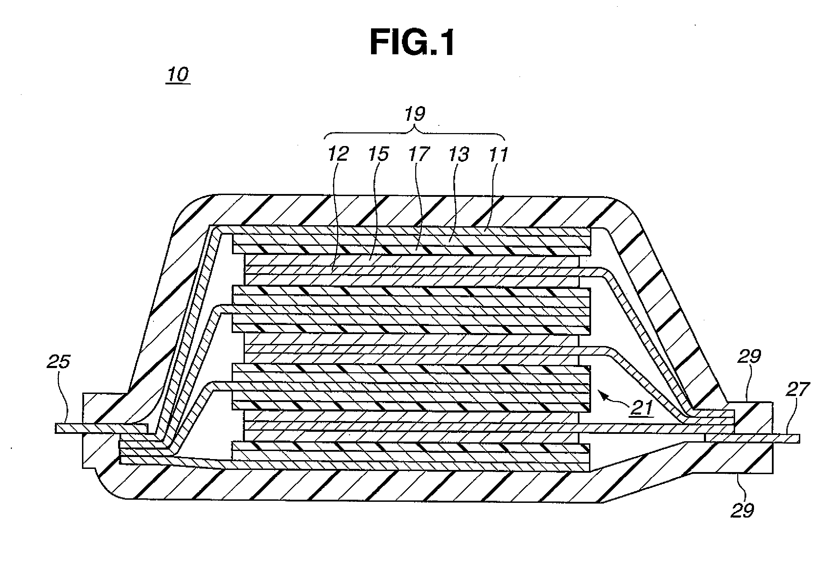

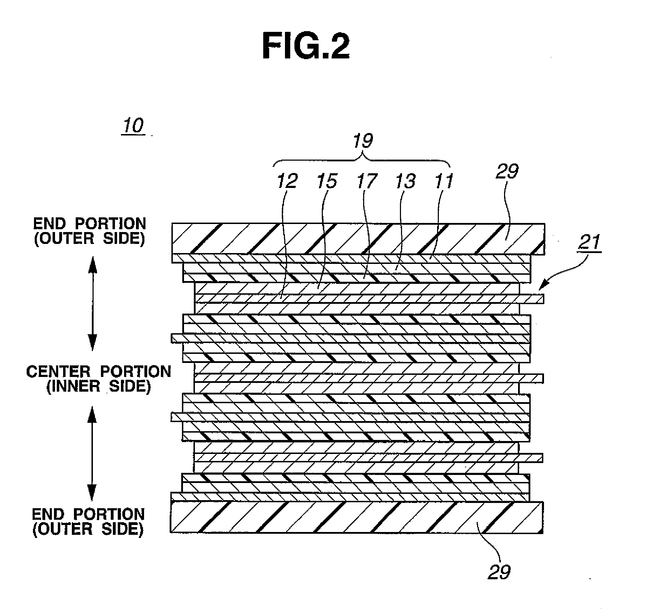

Fig. 1 is a schematic view showing a basic structure of an embodiment of a laminated-type (flat-type) nonaqueous electrolyte lithium ion secondary battery (in the following, also referred to simply as "a laminated-structure battery"). Fig. 2 is a partial sectional view of the laminated-type (flat-type) nonaqueous electrolyte lithium ion secondary battery of Fig. 1. As shown in Figs. 1 and 2, laminated-structure battery 10 of the present embodiment has a structure in which generally rectangular power generation elements 21, in which charge and discharge reactions actually progress, are sealed up in the inside of battery cladding 29 as a cladding body. Herein, power generation element 21 has a structure prepared by laminating a cathode, electrolyte layer 17, and an anode. The cathode has a structure in which cathode active material layers 13 have been arranged on both surfaces of cathode collector 11. The anode has a structure in which anode active material layers 15 have been arranged on both surfaces of anode collector 12. Specifically, the anode, the electrolyte layer and the cathode are laminated in this order in a manner that one cathode active material layer 13 and the adjacent anode active material layer 15 are opposed to each other with an interposal of electrolyte layer 17. With this, the cathode, the electrolyte layer and the anode, which are adjacent to each other, constitute a single battery layer (single cell) 19. Therefore, it is also possible to say that laminated-structure battery 10 of the present embodiment has a structure in an electrical parallel connection by laminating a plurality of single battery layers (single cells) 19. It is also possible to say that a bipolar (internal series connection type) laminated (laminated structure) lithium ion secondary battery has a structure in an electrical series connection by laminating a plurality of single battery layers (single cells). Furthermore, it is optional to further arrange an adhesive layer (not shown in the drawings) between the separator of electrolyte layer 17 and the cathode and/or the anode.

Although cathode active material layers 13 are arranged on only one surfaces of the outermost cathode collectors positioned at both outermost layers of power generation element 21, it is optional to form the active material layers on both surfaces. That is, it is optional to use a collector formed on its both surfaces with active material layers as it is as a collector of the outermost layer, not making a collector, which is formed on its only one surface with an active material layer, only for the outermost layer. It is optional to position the outermost layer anode collectors at both outermost layers of power generation element 21 by reversing the arrangement of the cathode and the anode of Fig. 1 and to arrange an anode active material layer(s) on one surface or both surfaces of the outermost anode collector.

Furthermore, in the present embodiment, the electrode (cathode or anode) include a self-supporting electrode. Self-supporting electrode is one that keeps its shape even with no metal foil (collector). That is, self-supporting electrode (self-supporting structure) is one capable of keeping its shape with only an active material layer even with no metal foil (collector). Self-supporting electrode (self-supporting structure) is, however, required to have as electrode elements a collector (it may be a metal vapor deposited film, a plating thin film, a metal wiring, or the like, which is lower than metal foils in mechanical strength and is not capable of keeping its shape, excepting metal foils) and an active material layer. The above-defined self-supporting electrode has active material layers (cathode active material layer and anode active material layer) and collectors (cathode collector and anode collector) directly formed on one surfaces of the active material layers. The active material layer contains a porous skeleton body and an active material (cathode active material or anode active material) that is held in pores of the porous skeleton body.

In the present specification, in the case of mentioning "collector", it may be referred to as both of the cathode collector and the anode collector, or as only one of them, or as a bipolar electrode collector of a bipolar battery. Similarly, in the case of mentioning "active material layer", it may be referred to as both of the cathode active material layer and the anode active material layer or as only one of them. Similarly, in the case of mentioning "active material", it may be referred to as both of the cathode active material and the anode active material or as only one of them.

Tip portions of cathode collecting tab (cathode collecting plate) 25 and anode collecting tab (anode collecting plate) 27, which are electrically connected with respective electrodes (cathode and anode), are attached to cathode collector 11 and anode collector 12. It has a structure in which the other tip portions of cathode collecting tab 25 and anode collecting tab 27 are guided to the outside of battery cladding 29 in a manner to be sandwiched between end portions of battery cladding 29. It is optional to respectively attach cathode collecting tab 25 and anode collecting tab 27 to cathode collector 11 and anode collector 12 of respective electrodes by an ultrasonic welding, a resistance welding, or the like, if necessary, through electrode leads (cathode lead and anode lead) (not shown in the drawings).

Furthermore, as a characteristic structure of laminated-structure battery 10 of the present embodiment, it is characterized by that a center portion (also referred to as inner side, inside, or center side; see Fig. 2) in the direction of lamination is made to be higher than an end portion (also referred to as outer side, outside, or end side; see Fig. 2) in terms of A/C ratio. That is, A/C ratios of single battery layers (single cells) 19 are made to be higher as being closer to the center portion in the direction of lamination. Therefore, even if the charge and discharge capacity of the cathode low in heat radiation increases, it has a structure that A/C ratio of the center portion in the direction of lamination is higher than that of the end portion (see Tables 2, 4, 6, 8, 10 and 12 of Examples). Therefore, the difference between the effective A/C ratios at the center portion and the end portion in the direction of lamination is reduced. With this, it is possible to prevent Li precipitation at the electrode of the center portion. As a result, it is possible to suppress unevenness of the currents between the electrodes of the laminated single battery layers (single cells) to obtain an even output. As a result, it is possible to prevent the performance deterioration at an early stage, keep a high charge and discharge efficiency even after the use for a long term (after 500 cycles in Examples), and improve durability of the battery (see Table 17 of Examples).

Herein, it suffices that a preferable range of the difference of A/C ratios of the center portion and the end portion in the direction of lamination of the single battery layers (single cells) leads to the accomplishment of the object of the present embodiment and the obtainment of the desired advantageous effect. In particular, even if the charge and discharge capacity of the cathode low in heat radiation increases by making A/C ratio of the center portion high, it is desirable that A/C ratio is not lower than 1. By making A/C ratio of the center portion high, the difference between the effective A/C ratios at the center portion and the end portion in the direction of lamination in the laminated-structure battery is reduced. With this, it is possible to suppress the output unevenness of the single battery layers (single cells) of the center portion and the end portion. As a result, it is possible to keep a high charge and discharge efficiency even after the use for a long term and improve durability (life) of the battery.

Specifically, it suffices that A/C ratio of the center portion in the direction of lamination is higher than A/C ratio of the end portion. It suffices that the former is higher than the latter even by 0.001, preferably by 0.1 to 0.4, more preferably by 0.15 to 0.25. If A/C ratio of the center portion in the direction of lamination is higher than A/C ratio of the end portion by only less than 0.1, there is a risk of being impossible to sufficiently achieve the above-mentioned object. On the other hand, in case that the former is higher than the latter by exceeding 0.4, the anode becomes heavy and thick, thereby causing a risk of becoming large in size.

Furthermore, A/C ratio of the center portion in the direction of lamination is in a range of 1.2-1.4, more preferably 1.25-1.35. In case that A/C ratio of the center portion is lower than 1.2, it causes a risk of becoming disadvantageous in energy when viewed under the same density. Therefore, it is not desirable. The upper limit of A/C ratio of the center portion is not particularly limited. If it exceeds 1.4, the anode becomes heavy and thick, thereby causing a risk of becoming large in size. Therefore, it is not desirable.

A/C ratio of the end portion in the direction of lamination is in a range of 1.05-1.2, preferably 1.1-1.15. In case that A/C ratio of the end portion is lower than 1.05, it causes a risk of becoming disadvantageous in energy when viewed under the same density. Therefore, it is not desirable. If A/C ratio of the end portion exceeds 1.2, the anode becomes heavy and thick, thereby causing a risk of becoming large in size. Therefore, it is not desirable.

The charge A/C ratio and the discharge A/C ratio of each single battery layer can be measured by, for example, the following method.

### 1. Regarding anode capacity

It is possible by TEM (transmission electron microscope) to confirm an amorphous layer (active material) on the surface of an anode active material layer and determine a mass proportion of the anode active material, the binder, etc., which are structural members of the anode active material layer of each single battery layer (single cell), and the volume of the anode active material. With this, it is possible to confirm whether or not mass of the anode active material and the anode electrode density are in a gradation in each single battery layer (single cell) in the battery.

A cell is assembled by using anode of each single battery layer (single cell) in the battery obtained by the production step (or by disassembling the battery and then taking anode out of each single battery layer (single cell)) and by using Li for the counter electrode. Then, under storage at 25 °C, these cells are charged until a predetermined upper limit voltage (normally 4.25 V) (until the cells become a fully charged condition) at a rate of 0.05 C (or a rate of 1 C). With this, it is possible to determine the anode charge capacity (Ah) of each single battery layer (single cell) in the battery (see the method of determining A/C ratio of Example 1).

Next, under storage at 25 °C, these cells are discharged until a predetermined lower limit voltage (normally 3.0 V) (until a condition in which cell capacity almost cannot be taken out) at a rate of 0.05 C (or a rate of 1 C). With this, it is possible to determine the anode discharge capacity (Ah) of each single battery layer (single cell) in the battery.

### 2. Regarding cathode capacity

By ICP (inductively coupled plasma emission spectrometry), the compositional proportion of transition metals (for example, in the above-mentioned Example, Ni, Co and Al) in the cathode active material is confirmed, and the cathode capacity (Ah) is determined from the volume of the cathode active material per unit weight and mass of the cathode active material. With this, it is possible to confirm whether or not mass of the cathode active material and the cathode electrode density are in a gradation in each single battery layer (single cell) in the battery.

A cell is assembled by using cathode of each single battery layer (single cell) in the battery obtained by the production step (or by disassembling the battery and then taking cathode out of each single battery layer (single cell)) and by using Li for the counter electrode. Then, under storage at 25 °C, these cells are charged until a predetermined upper limit voltage (normally 4.25 V) (until the cells become a fully charged condition) at a rate of 0.2 C (or a rate of 1 C). With this, it is possible to determine the cathode charge capacity (Ah) of each single battery layer (single cell) in the battery.

Next, under storage at 25 °C, the cells are discharged until a predetermined lower limit voltage (normally 3.0 V) (until a condition in which cell capacity almost cannot be taken out) at a rate of 0.2 C (or a rate of 1 C). With this, it is possible to determine the cathode discharge capacity (Ah) of each single battery layer (single cell) in the battery.

It is possible to calculate the anode charge capacity (Ah)/the cathode charge capacity (Ah) of each single battery layer, determined by the above items 1 and 2, as charge A/C ratio of each single battery layer. Furthermore, it is possible to calculate the anode discharge capacity (Ah)/the cathode discharge capacity (Ah) of each single battery layer, determined by the above items 1 and 2, as discharge A/C ratio of each single battery layer.

In the following, there is explained a specific requirement (means) for making the center portion higher than the end portion in terms of A/C ratio. It is optional to apply (use) the following requirement (means) alone or apply (use) at least two requirements (means) by suitably combining them.

### (First means)

As a specific requirement (first means) for making the center portion higher than the end portion in A/C ratio, the center portion is made to be higher than the end portion in the direction of lamination in terms of at least one of the anode charge capacity and the anode discharge capacity of each single battery layer. Upon this, it is optional to make the center portion equal to the end portion in the direction of lamination in terms of the cathode charge capacity or the cathode discharge capacity (see Example 1). Alternatively, as shown in the second means, it is optional to set the cathode charge capacity or the cathode discharge capacity in a gradation in the direction of lamination. By the present means, it is possible to satisfy the above requirement. Thereby, it is possible to achieve the above-mentioned object of the present embodiment and obtain a desired advantageous effect. In particular, since the anode charge and discharge capacity is made to be higher as being closer to the center portion, the difference of the effective A/C ratio between the center portion and the end portion in the direction of lamination is reduced. With this, it is possible to obtain an even output. As a result, it is possible to achieve the above object (task) and advantageous effect, such as being capable of preventing the performance deterioration at an early stage and improving durability (life) of the battery. Since the anode charge and discharge capacity is made to be higher as being closer to the center portion, it is preferable that A/C ratio is not lower than 1 even if the charge and discharge capacity of the cathode low in heat radiation increases.

Specifically, it suffices that the anode charge capacity or the anode discharge capacity (also referred to as simply anode charge and discharge capacity) of the center portion in the direction of lamination is higher than the anode charge capacity or the anode discharge capacity of the end portion. In case that the anode charge capacity of the center portion in the direction of lamination is 100 %, the anode charge capacity of the end portion in the direction of lamination is in a range of 87-97 %, preferably 88-96 %. If the anode charge and discharge capacity of the end portion is in the above range relative to 100 % of the anode charge and discharge capacity of the center portion in the direction of lamination, it is possible to sufficiently achieve the above object and obtain a desired advantageous effect. In particular, if it is not higher than 97 %, it is possible to effectively prevent the anode from becoming heavy, thick and large in size by increasing mass per area in order to increase the anode charge capacity. If it is not lower than 87 %, it is superior in terms of improving the battery life by suppressing the generation of the electric current unevenness.

The method for changing the percentage of the anode charge and discharge capacity in the direction of lamination is not particularly limited. For example, (a) as shown in Example 1, it is optional to use at least two anode active materials that are different in charge and discharge capacity per unit mass and to change the mixing proportion of these in the direction of lamination (see Tables 1, 2 and 17), (b) it is optional to use the same anode active material and change its mass per area (the amount of the active material per unit area) in the direction of lamination, and (c) it is optional to use the same anode active material and change its coating amount (the amount of the active material per unit volume) in the direction of lamination. Alternatively, it is optional to suitably combine at least two of the above-mentioned (a) to (c). The method for changing the percentage of the anode charge and discharge capacity is, however, not limited at all to the above-mentioned methods. It is optional to suitably use a method publicly known hitherto.

To determine the percentage of the anode charge capacity or the anode discharge capacity, it is possible to apply the method of measuring the anode charge capacity or the anode discharge capacity upon calculating the above-mentioned charge A/C ratio or discharge A/C ratio.

### (Second means)

As a specific requirement (second means) for making the center portion higher than the end portion in A/C ratio, the center portion is made to be lower than the end portion in the direction of lamination in terms of at least one of the cathode charge capacity and the cathode discharge capacity of each single battery layer. Upon this, it is optional to make the center portion equal to the end portion in the direction of lamination in terms of the anode charge capacity or the anode discharge capacity (see Example 2). Alternatively, as shown in the first means, it is optional to set the anode charge capacity or the anode discharge capacity in a gradation in the direction of lamination. By the present means, it is possible to satisfy the above requirement. Thereby, it is possible to achieve the above-mentioned object of the present embodiment and obtain a desired advantageous effect. In particular, since the cathode charge and discharge capacity is made to be lower as being closer to the center portion, the difference of the effective A/C ratio between the center portion and the end portion in the direction of lamination is reduced. With this, it is possible to obtain an even output. As a result, it is possible to achieve the above object (task) and advantageous effect, such as being capable of preventing the performance deterioration at an early stage and improving durability (life) of the battery. Since the cathode charge and discharge capacity is made to be higher as being closer to the end portion, it is preferable that A/C ratio is not lower than 1 even if the charge and discharge capacity of the cathode low in heat radiation increases.

Specifically, it suffices that the cathode charge capacity or the cathode discharge capacity (also referred to as simply cathode charge and discharge capacity) of the center portion in the direction of lamination is lower than the cathode charge capacity or the cathode discharge capacity of the end portion. In case that the cathode charge capacity of the end portion in the direction of lamination is 100 %, the cathode charge capacity of the center portion in the direction of lamination is in a range of 87-97 %, preferably 88-96 %. If the cathode charge and discharge capacity of the center portion is in the above range relative to 100 % of the cathode charge and discharge capacity of the end portion in the direction of lamination, it is possible to sufficiently achieve the above object and obtain a desired advantageous effect. In particular, if it is not higher than 97 %, it is possible to effectively prevent the cathode from becoming heavy, thick and large in size by increasing mass per area in order to increase the cathode charge capacity. If it is not lower than 87 %, it is superior in terms of improving the battery life by suppressing the generation of the electric current unevenness.

The method for changing the percentage of the cathode charge and discharge capacity in the direction of lamination is not particularly limited. For example, (a) as shown in Example 2, it is optional to use at least two cathode active materials (for example, lithium-transition metal complex oxides each containing at least two transition metals, etc.) that are different in charge and discharge capacity per unit mass and to change the compositional proportion of these transition metals in the direction of lamination (see Tables 3, 4 and 17), (b) it is optional to use the same cathode active material and change its mass per area (the amount of the active material per unit area) in the direction of lamination, and (c) it is optional to use the same cathode active material and change its coating amount (the amount of the active material per unit volume) in the direction of lamination. Alternatively, it is optional to suitably combine at least two of the above-mentioned (a) to (c). The method for changing the percentage of the cathode charge and discharge capacity is, however, not limited at all to the above-mentioned methods. It is optional to suitably use a method publicly known hitherto.

To determine the percentage of the cathode charge capacity or the cathode discharge capacity, it is possible to apply the method of measuring the cathode charge capacity or the cathode discharge capacity upon calculating the above-mentioned charge A/C ratio or discharge A/C ratio.

### (Third means)

As a specific requirement (third means) for making the center portion higher than the end portion in A/C ratio, the center portion is made to be higher than the end portion in the direction of lamination in terms of mass of the anode active material of each single battery layer. In particular, it is preferably used together with the first means. Upon this, it is optional to make the center portion equal to the end portion in the direction of lamination in terms of mass of the cathode active material (see Example 3). Alternatively, as shown in the fourth means, it is optional to set mass of the cathode active material in a gradation in the direction of lamination. By the present means, it is possible to satisfy the above requirement. Thereby, it is possible to achieve the above-mentioned object of the present embodiment and obtain a desired advantageous effect. In particular, since the proportion of mass per unit area of the anode active material is made to be higher as being closer to the center portion (see Tables 5 and 6), the difference of the effective A/C ratio between the center portion and the end portion in the direction of lamination is reduced. With this, it is possible to obtain an even output. As a result, it is possible to achieve the above object (task) and advantageous effect, such as being capable of preventing the performance deterioration at an early stage and improving durability (life) of the battery. Since the proportion of mass per unit area of the anode active material is made to be higher as being closer to the center portion, it is preferable that A/C ratio is not lower than 1 even if the charge and discharge capacity of the cathode low in heat radiation increases.

Specifically, it suffices that mass of the anode active material (the amount of the anode active material per unit area; it is the same in the following) of the center portion in the direction of lamination is higher than mass of the anode active material of the end portion. In case that mass of the anode active material of the center portion in the direction of lamination is 100 %, mass of the anode active material of the end portion in the direction of lamination is in a range of 87-97 %, preferably 88-96 %. If mass of the anode active material of the end portion is in the above range relative to 100 % of mass of the anode active material of the center portion in the direction of lamination, it is possible to sufficiently achieve the above object and obtain a desired advantageous effect. In particular, if it is not higher than 97 %, it is possible to effectively prevent the anode from becoming heavy, thick and large in size due to mass (mass per unit area) of the anode active material being too large. If it is not lower than 87 %, it is superior in terms of improving the battery life by suppressing the generation of the electric current unevenness.

As the method for changing the proportion of the anode active material in the direction of lamination, it suffices to change its mass per unit area (the amount of the anode active material per unit area) in the direction of lamination by using the same anode active material, as shown in Example 3 (see Tables 5, 6 and 17).

To determine the percentage of the anode charge capacity or the anode discharge capacity, it is possible to apply the method of measuring the anode charge capacity or the anode discharge capacity upon calculating the above-mentioned charge A/C ratio or discharge A/C ratio.

Mass of the above-mentioned anode active material can be determined by disassembling the battery, exposing a section, mapping an anode active material portion from a sectional image of SEM (scanning electron microscope), and measuring (counting) the size (area), the length, the particle size (diameter), etc. From this, the volume proportion is determined, and then it can be converted to mass %.

### (Fourth means)

As a specific requirement (fourth means) for making the center portion higher than the end portion in A/C ratio, the center portion is made to be lower than the end portion in the direction of lamination in terms of mass of the cathode active material of each single battery layer. In particular, it is preferably used together with the second means. Upon this, it is optional to make the center portion equal to the end portion in the direction of lamination in terms of mass of the anode active material (see Example 4). Alternatively, as shown in the third means, it is optional to set mass of the anode active material in a gradation in the direction of lamination. By the present means, it is possible to satisfy the above requirement. Thereby, it is possible to achieve the above-mentioned object of the present embodiment and obtain a desired advantageous effect. In particular, since the proportion of mass per unit area of the cathode active material is made to be higher as being closer to the end portion and to be lower as being closer to the center portion (see Tables 7 and 8), the difference of the effective A/C ratio between the center portion and the end portion in the direction of lamination is reduced. With this, it is possible to obtain an even output. As a result, it is possible to achieve the above object (task) and advantageous effect, such as being capable of preventing the performance deterioration at an early stage and improving durability (life) of the battery. Since the proportion of mass per unit area of the cathode active material is made to be higher as being closer to the end portion, it is preferable that A/C ratio is not lower than 1 even if the charge and discharge capacity of the cathode low in heat radiation increases.

Specifically, it suffices that mass of the cathode active material (the amount of the cathode active material per unit area; it is the same in the following) of the center portion in the direction of lamination is lower than mass of the cathode active material of the end portion. In case that mass of the cathode active material of the end portion in the direction of lamination is 100 %, mass of the cathode active material of the center portion in the direction of lamination is in a range of 87-97 %, preferably 88-96 %. If mass of the cathode active material of the center portion is in the above range relative to 100 % of mass of the cathode active material of the end portion in the direction of lamination, it is possible to sufficiently achieve the above object and obtain a desired advantageous effect. In particular, if it is not higher than 97 %, it is possible to effectively prevent the cathode from becoming heavy, thick and large in size due to mass (mass per unit area) of the cathode active material being too large. If it is not lower than 87 %, it is superior in terms of improving the battery life by suppressing the generation of the electric current unevenness.

As the method for changing the proportion of the cathode active material in the direction of lamination, it suffices to change its mass per unit area (the amount of the cathode active material per unit area) in the direction of lamination by using the same cathode active material, as shown in Example 4 (see Tables 7, 8 and 17).

Mass of the above-mentioned cathode active material can be determined by disassembling the battery, exposing a section, mapping an anode active material portion from a sectional image of SEM (scanning electron microscope), and measuring (counting) the size (area), the length, the particle size (diameter), etc. From this, the volume proportion is determined, and then it can be converted to mass %.

### (Fifth means)

As a specific requirement (fifth means) for making the center portion higher than the end portion in A/C ratio, the center portion is made to be higher than the end portion in the direction of lamination in terms of the anode electrode density of each single battery layer. In particular, it is preferably used together with the first and third means. Upon this, it is optional to make the center portion equal to the end portion in the direction of lamination in terms of the cathode electrode density (see Example 5). Alternatively, as shown in the sixth means, it is optional to set the cathode electrode density in a gradation in the direction of lamination. By the present means, it is possible to satisfy the above requirement. Thereby, it is possible to achieve the above-mentioned object of the present embodiment and obtain a desired advantageous effect. Additionally, the anode electrode density is made to be higher as being closer to the center portion. Therefore, it is possible to make the cell thickness equal as a whole even if applying a greater amount of the anode active material. Even if the amount of the cathode or anode active material to be applied is increased, it is also possible to make the cell volume equal by making the opposed electrodes in each lamination equal in energy density (thickness). Since the anode electrode density is made to be higher as being closer to the center portion, the difference of the effective A/C ratio between the center portion and the end portion in the direction of lamination is reduced. With this, it is possible to obtain an even output. As a result, it is possible to achieve the above object (task) and advantageous effect, such as being capable of preventing the performance deterioration at an early stage and improving durability (life) of the battery. Since the anode electrode density is made to be higher as being closer to the center portion, it is preferable that A/C ratio is not lower than 1 even if the charge and discharge capacity of the cathode low in heat radiation increases.

Specifically, it suffices that the anode electrode density (mass of the anode active material/volume of the anode active material in the anode active material layer; it is the same in the following) of the center portion in the direction of lamination is higher than the anode electrode density of the end portion. In case that the anode electrode density of the center portion in the direction of lamination is 100 %, the anode electrode density of the end portion in the direction of lamination is in a range of 87-97 %, preferably 88-96 %. If the anode electrode density of the end portion is in the above range relative to 100 % of the anode electrode density of the center portion in the direction of lamination, it is possible to sufficiently achieve the above object and obtain a desired advantageous effect. In particular, if it is not higher than 97 %, it is possible to effectively prevent the anode from becoming heavy, thick and large in size due to making mass per unit area large to increase the anode electrode density. If it is not lower than 87 %, it is superior in terms of improving the battery life by suppressing the generation of the electric current unevenness.

The method for changing the anode electrode density in the direction of lamination is not particularly limited. For example, as shown in Example 5, it suffices to use the same anode active material and change in the direction of lamination its mass per unit area (mass of the active material per unit area) and its amount for application (the amount of the active material per unit volume) (see Tables 9 and 10). The method for changing the anode electrode density is, however, not limited to the above method, and it is optional to suitably use a method publicly known hitherto.

The anode electrode density (mass of the anode active material/volume of the anode active material) can be determined by disassembling the battery, exposing a section, mapping an anode active material portion from a sectional image of SEM (scanning electron microscope), and measuring (counting) the size (area), the length, the particle size (diameter), etc. From this, the volume proportion is calculated. Furthermore, it is converted to mass %, and thereby it is possible to determine the anode electrode density from mass and volume of the anode active material.

### (Sixth means)

As a specific requirement (sixth means) for making the center portion higher than the end portion in A/C ratio, the center portion is made to be lower than the end portion in the direction of lamination in terms of the cathode electrode density of each single battery layer. In particular, it is preferably used together with the second and fourth means. Upon this, it is optional to make the center portion equal to the end portion in the direction of lamination in terms of the anode electrode density (see Example 6). Alternatively, as shown in the fifth means, it is optional to set the anode electrode density in a gradation in the direction of lamination. By the present means, it is possible to satisfy the above requirement. Thereby, it is possible to achieve the above-mentioned object of the present embodiment and obtain a desired advantageous effect. Additionally, the cathode electrode density is made to be lower as being closer to the center portion and to be higher as being closer to the end portion. Therefore, it is possible to make the thickness equal as a whole even if applying a greater amount of the cathode active material. Even if the amount of the cathode or anode active material to be applied is increased, it is also possible to make the cell volume equal by making the opposed electrodes in each lamination equal in energy density (thickness). Since the cathode electrode density is made to be higher as being closer to the end portion, the difference of the effective A/C ratio between the center portion and the end portion in the direction of lamination is reduced. With this, it is possible to obtain an even output. As a result, it is possible to achieve the above object (task) and advantageous effect, such as being capable of preventing the performance deterioration at an early stage and improving durability (life) of the battery. Since the cathode electrode density is made to be higher as being closer to the end portion, it is preferable that A/C ratio is not lower than 1 even if the charge and discharge capacity of the cathode low in heat radiation increases.

Specifically, it suffices that the cathode electrode density (mass of the cathode active material/volume of the cathode active material in the cathode active material layer; it is the same in the following) of the center portion in the direction of lamination is lower than the cathode electrode density of the end portion. In case that the cathode electrode density of the end portion in the direction of lamination is 100 %, the cathode electrode density of the center portion in the direction of lamination is in a range of 87-97 %, preferably 88-96 %. If the cathode electrode density of the center portion is in the above range relative to 100 % of the cathode electrode density of the end portion in the direction of lamination, it is possible to sufficiently achieve the above object and obtain a desired advantageous effect. In particular, if it is not higher than 97 %, it is possible to effectively prevent the cathode from becoming heavy, thick and large in size due to making mass per unit area large to increase the cathode electrode density. If it is not lower than 87 %, it is superior in terms of improving the battery life by suppressing the generation of the electric current unevenness.

The method for changing the cathode electrode density in the direction of lamination is not particularly limited. For example, as shown in Example 6, it suffices to use the same cathode active material and change in the direction of lamination its mass per unit area (mass of the active material per unit area) and its amount for application (the amount of the active material per unit volume) (see Tables 11 and 12). The method for changing the cathode electrode density is, however, not limited to the above method, and it is optional to suitably use a method publicly known hitherto.

The cathode electrode density (mass of the cathode active material/volume of the cathode active material) can be determined by disassembling the battery, exposing a section, mapping a cathode active material portion from a sectional image of SEM (scanning electron microscope), and measuring (counting) the size (area), the length, the particle size (diameter), etc. From this, the volume proportion is calculated. Furthermore, it is converted to mass %, and thereby it is possible to determine the cathode electrode density from mass and volume of the anode active material.

The above is an explanation about specific requirements (means) for making the center portion higher than the end portion in terms of the A/C ratio of the present embodiment. In the following, there is conducted an explanation about each structural requirement (structural member) of laminated-structure battery 10 of the present embodiment. Each structural requirement (structural member) of laminated-structure battery 10 is not limited to the following mode, but a mode publicly known hitherto can similarly be used.

### (1) Collector

The collector is constituted of a conductive material, and an active material layer is arranged on its one surface or both surfaces. The material for constituting the collector is not particularly limited. For example, it is possible to use a metal or a resin having conductivity in which a conductive filler has been added to a conductive polymer material or a non-conductive polymer material.

As the metal, it is possible to cite aluminum, nickel, iron, stainless steel, titanium, copper, etc. Besides these, it is possible to preferably use a cladding member of nickel and aluminum, a cladding member of copper and aluminum, a plating member made of a combination of these metals, etc. It may be a foil prepared by covering the metal surface with aluminum. In particular, from the viewpoint of conductivity and battery action potential, aluminum, stainless steel and copper are preferable.

As the form of a collector using metal, besides metal foil, it is optional to use a metal vapor deposited layer, a metal plating layer, a conductive primer layer, and a metal wiring. As to the metal vapor deposited layer and the metal plating layer, it is possible to form (arrange) an extremely thin metal vapor deposited layer or metal plating layer on one surface of the active material layer by a vacuum deposition method or various plating methods. Also as to the metal wiring, it is possible to form (arrange) an extremely thin metal wiring on one surface of the active material layer by a vacuum deposition method or various plating methods. Furthermore, it is possible to impregnate the metal wiring with a primer layer and bond them with each other by thermocompression bonding. Furthermore, in the case of using a punched metal sheet or an expanded metal sheet as the metal wiring, it is possible to arrange the metal wiring (collector) between active material layers by applying an electrode slurry on both surfaces of the punched metal sheet or the expanded metal sheet and drying it. Even in the case of using a metal foil, it is possible to arrange the metal foil (collector) on one surface of the active material layer by applying an electrode slurry on the metal foil (one surface or both surfaces) and drying it. Furthermore, it is possible to make the conductive primer layer basically by mixing a resin with carbon (chain form or fiber form) or a metal filler (aluminum, copper, stainless steel, nickel powder or the like used for the collector material). Various mixings are acceptable. It can be formed (arranged) by applying this on one surface of the active material layer and drying the same.

The above conductive primer layer includes a current collecting resin layer having conductivity. Preferably, the conductive primer layer is formed of a current collecting resin layer having conductivity. In order that the conductive primer layer may have conductivity, as a specific configuration, it is possible to cite 1) a configuration in which a polymer material constituting the resin is a conductive polymer and 2) a configuration in which the current collecting resin layer contains resin and a conductive filler (conductive member).

The conductive polymer is selected from materials having electrical conductivity and no conductivity with respect to the ion used as a charge transfer medium. These conductive polymers are considered to show conductivity by the formation of an energy band by a conjugated polyene system. As a typical example, it is possible to use a polyene series conductive polymer of which practical use is in progress for electrolytic condensers, etc. Specifically, there are preferable polyaniline, polypyrrole, polythiophene, polyacetylene, polyparaphenylene, polyphenylene vinylene, polyacrylonitrile, polyoxadiazole, or a mixture of these, etc. From the viewpoint of electron conductivity and being stably usable in a battery, polyaniline, polypyrrole, polythiophene, and polyacetylene are more preferable.

The conductive filler (conductive member) used in the configuration of the above item 2) is selected from materials having conductivity. Preferably, from the viewpoint of suppressing ion transmission in the current collecting resin layer having conductivity, it is desirable to use a material that has no conductivity with respect to the ion used as a charge transfer medium.

Specifically, it is possible to cite aluminum material, stainless steel (SUS) material, carbon material, silver material, gold material, copper material, titanium material, etc., but it is not limited to these. These conductive fillers may be used singly, or at least two of them may be used together. Furthermore, it is optional to use an alloy material of these. Silver material, gold material, aluminum material, stainless steel material, carbon material are preferable. Carbon material is more preferable. Furthermore, these conductive fillers (conductive members) may be ones prepared by coating particle-type ceramic materials and resin materials at their surroundings with conductive materials (the above conductive members) by plating or the like.

As the above-mentioned carbon material, it is possible to cite at least one selected from the group consisting of acetylene black, Vulcan, black pearl, carbon nanofiber, ketjen black, carbon nanotube, carbon nanohorn, carbon nanoballoon, hard carbon, and fullerene. These carbon materials are very wide in potential window, stable in a wide range against both of the cathode potential and the anode potential, and superior in conductivity. Furthermore, since carbon materials are very light in weight, the increase of mass becomes the minimum. Furthermore, carbon materials are frequently used as a conductive assistant of an electrode. Even in contact with these conductive assistants, contact resistance becomes very low since they are the same materials. In the case of using a carbon material as conductive particles, it is also possible to lower conformability of an electrolyte by conducting a hydrophobic treatment on the surface of carbon to make a situation in which the electrolyte hardly penetrates into pores of the collector.

The shape of the conductive filler (conductive member) is not particularly limited. It is possible to suitably select a publicly known shape, such as particle form, powder form, fiber form, plate form, block form, cloth form or mesh form. For example, in case that one has a desire to provide the resin with conductivity in a wide range, it is preferable to use a conductive material in particle form. On the other hand, in case that one has a desire to further improve the resin in conductivity in a particular direction, it is preferable to use a conductive material having a certain direction in the shape such as fiber form.

The average particle size of the conductive filler is not particularly limited. It is desirable to be about 0.01 to 10 µm. In the present specification, the particle size means the maximum distance L in the distances between arbitrary two points on the contour of the conductive filler. As the value of the average particle size, there is taken a value calculated as the average value of the particle sizes of several to dozens of gains observed in the vision by using an observation means such as scanning electron microscope (SEM), transmission electron microscope (TEM), etc. It is also possible to define the particle size and the average particle size of the after-mentioned active material particles, etc.

Furthermore, in case that the current collecting resin layer has a configuration to contain a conductive filler, the resin to form the current collecting resin layer may contain a nonconductive polymer material for binding the conducting filler, in addition to the conductive filler. By using a nonconductive polymer material as a material for constituting the current collecting resin layer, it is possible to increase binding capacity of the conductive filler and increase credibility of the battery. The polymer material is selected from materials that can resist the cathode potential and the anode potential to be applied.

As examples of the nonconductive polymer material, it is possible to preferably cite polyethylene (PE), polypropylene (PP), polystyrene (PS), polyethylene terephthalate (PET), polyether nitrile (PEN), polyimide (PI), polyamide (PA), polyamide imide (PAI), polytetrafluoroethylene (PTFE), styrene-butadiene rubber (SBR), polyacrylonitrile (PAN), polymethyl acrylate (PMA), polymethyl methacrylate (PMMA), polyvinyl chloride (PVC), polyvinylidene fluoride (PVdF), polyvinylidene chloride (PVDC) or a mixture of these. These materials are very wide in potential window and stable against the cathode potential and the anode potential. Furthermore, since they are light in weight, it becomes possible to provide a battery with high output density.

The content of the conductive filler is not particularly limited. In particular, in case that the resin contains a conductive polymer material and can secure a sufficient conductivity, it is not necessarily essential to add the conductive filler. In case that the resin is made of only a nonconductive polymer material, however, it is essential to add a conductive filler for providing conductivity. Upon this, the content of the conductive filler is preferably 5-90 mass %, more preferably 30-85 mass %, still more preferably 50-80 mass %, relative to the total mass of the nonconductive polymer material. By adding the conductive filler of such amount to the resin, it is possible to provide the nonconductive polymer material too with a sufficient conductivity, while suppressing the mass increase of the resin.

The conductive primer layer may contain other additives besides the conductive filler and the resin, but is preferably made of the conductive filler and the resin.

Of materials constituting the collector, as a conductive polymer material, it is possible to cite, for example, polyaniline, polypyrrole, polythiophene, polyacetylene, polyparaphenylene, polyphenylene vinylene, polyacrylonitrile, and polyoxadiazole, etc. Since such conductive polymer material has a sufficient conductivity even by not adding a conductive filler, it is advantageous in terms of making the production steps easy and making the collector light in weight.

As the nonconductive polymer material, it is possible to cite, for example, polyethylene (PE; high density polyethylene (HDPE), low density polyethylene (LDPE)), polypropylene (PP), polyethylene terephthalate (PET), polyether nitrile (PEN), polyimide (PI), polyamide imide (PAI), polyamide (PA), polytetrafluoroethylene (PTFE), styrene-butadiene rubber (SBR), polyacrylonitrile (PAN), polymethyl acrylate (PMA), polymethyl methacrylate (PMMA), polyvinyl chloride (PVC), polyvinylidene fluoride (PVdF), polyvinylidene chloride (PVDC), polystyrene (PS), etc. Such nonconductive polymer material can have a superior potential resistance or solvent resistance.

According to need, it is optional to add the conductive filler to the above-mentioned conductive polymer material or nonconductive polymer material. In particular, in case that the resin as a base member of the collector is formed of only the nonconductive polymer, the conductive filler becomes inevitably essential to provide the resin with conductivity. The conductive filler can be used without a particular limitation as long as it is a material having conductivity. For example, as a material superior in conductivity, potential resistance, or lithium ion shielding property, it is possible to cite metals, conductive carbons, etc. Although the metal is not particularly limited, it is preferable to contain at least one metal selected from the group consisting of Ni, Ti, Al, Cu, Pt, Fe, Cr, Sn, Zn, In, Sb, and K, or an alloy or metal oxide containing these metals. Furthermore, although the conductive carbon is not particularly limited, it is preferable to contain at least one selected from the group consisting of acetylene black, Vulcan, black pearl, carbon nanofiber, ketjen black, carbon nanotube, carbon nanohorn, carbon nanoballoon, and fullerene. The amount of the conductive filler to be added is not particularly limited as long as it is the amount capable of providing the collector with a sufficient conductivity. In general, it is around 5-35 mass %.

The size of the collector is determined depending on the use of the battery. For example, if it is used for a large size battery in which a high energy density is required, a collector with a large area is used.

The thickness of the collector is preferably 1-100 µm, more preferably 3-80 µm, still more preferably 5-40 µm. Since the after-mentioned self-supporting electrode can be formed into a thin film, it is preferably 1-18 µm, more preferably 2-15 µm, still more preferably 3-13 µm. Upon making a self-supporting electrode, this can be produced without going through conventional coating and drying steps. Therefore, in case that a metal vapor deposited layer, a metal plating layer, a conductive primer layer or a metal wiring, which does not require going through conventional coating and drying steps, is used for the collector, it is not required to have a tensile strength required for the coating and drying steps. With this, according to need, it is possible to make the collector thin in thickness, thereby improving flexibility in designing the collector and contributing to making the electrode and by extension the battery light in weight.

In the case of using a punched metal sheet or an expanded metal sheet, which has a plurality of through holes, as the collector, it is possible to cite rectangle, rhombus, honeycomb shape, hexagonal shape, round shape, square shape, star shape, cruciform, etc. The formation of many holes of such predetermined shape by pressing to have, for example, a staggered arrangement or a parallel arrangement results in a so-called punched metal sheet, etc. Furthermore, the formation of many, substantially diamond-shaped, through holes by expanding a sheet having staggered cuts results in a so-called expanded metal sheet, etc.

In the case of using the above-mentioned collector having a plurality of through holes as the collector, opening ratio of the through holes of the collector is not particularly limited. A rough estimate of the lower limit of the opening ratio of the collector is preferably 10 areal % or greater, more preferably 30 areal % or greater, still more preferably 50 areal % or greater, still more preferably 70 areal % or greater, still more preferably 90 areal % or greater. In this way, in the electrode of the present embodiment, it is also possible to use a collector having an opening ratio of 90 areal % or greater. The upper limit is, for example, 99 areal % or less, or 97 areal % or less. In this way, laminated-structure battery 10 equipped with an electrode formed to have a collector having a significantly large opening ratio can significantly be reduced in its weight and by extension can be increased in capacity to have a high density.

In the case of using the above-mentioned collector having a plurality of through holes as the collector, the hole diameter (opening diameter) of the through holes of the collector is similarly not particularly limited, either. A rough estimate of the lower limit of the opening diameter of the collector is preferably 10 µm or greater, more preferably 20 µm or greater, still more preferably 50 µm or greater, particularly preferably 150 µm or greater. The upper limit is, for example, around 300 µm or less, preferably 200 µm or less. The opening diameter mentioned herein refers to the diameter of a circumscribed circle of the through hole or opening portion. The diameter of the circumscribed circle is the average of those by observing the surface of the collector with a laser microscope, a tool maker's microscope or the like and fitting the circumscribed circles onto the opening portions.

### (2) Electrodes (cathode and anode) and electrode active material layer

The cathode and the anode have a function to generate electrical energy by the transfer of lithium ions. The cathode necessarily contains a cathode active material. The anode necessarily contains an anode active material.

In the case of the laminated-structure battery, these electrode structures have a structure in which an active material layer containing an active material is formed on the surface of the collector as in the configuration of Fig. 1. On the other hand, the electrode (bipolar electrode) in the case of a bipolar secondary battery has a structure in which a cathode active material layer containing a cathode active material is formed on one surface of a collector, and an anode active material layer containing an anode active material is formed on the other surface. That is, it has a configuration in which the cathode (cathode active material layer) and the anode (anode active material layer) have been integrated with each other with an interposal of the collector. According to need, the active material layer may contain conductive assistant, binder, and additives, such as electrolyte salt (lithium salt) and ion conductive polymer, besides the active material.

### (2a) Cathode active material

As the cathode active material, it is possible to use one publicly known hitherto.

As the cathode active material, it is possible to cite, for example, lithium-transition metal complex oxides, such as LiMn₂O₄, LiCoO₂, LiNiO₂, Li(Ni, Co, Mn)O₂, Li₂MnO₃, Li₂MnO₃-LiMO₂ series (M = Co, Ni, etc.) solid solutions and those in which these transition metals have partly been replaced with other elements, lithium-transition metal phosphorus compounds, lithium-transition metal sulfuric acid compounds, etc. In some cases, it is optional to use at least two types of cathode active materials. Preferably, from the viewpoint of capacity and output characteristics, a lithium-transition metal complex oxide is used as the cathode active material. It is needless to say that cathode active materials other than the above may be used.

In particular, in the present embodiment, they can preferably be applied to cathode active materials in which, as mentioned above, due to the temperature dependency, battery characteristics are accompanied with a large unevenness under a heat-receiving condition caused by heat generation. Specifically, they are cathode active materials having a (closest packing) layered rock-salt structure (rock-salt layered structure), such as LiNiO₂, those formed by partly replacing Ni of LiNiO₂ with other elements such as Co and Al, LiCoO₂, Li(Ni, Co, Mn)O₂ (referred to as LiNiₓCo_{y}Mn_{z}O₂; x+y+z = 1, etc., too), Li₂MnO₃, and Li₂MnO₃-LiMO₂ series (M = Co, Ni, etc.) solid solutions.

Fig. 3 is a schematic graph showing the cathode capacity change using cathode active materials having temperature dependency and a cathode active material having no temperature dependency.

As shown in Fig. 3, of cathode active materials, lithium manganate (LiMn₂O₄) is understood that there is no change in capacity fluctuation percentage to the change of cell temperature, resulting in no temperature dependence. That is, LiMn₂O₄ has no temperature dependency, but is low in energy density. In such cathode active material, battery characteristics are not accompanied with a large unevenness under a heat-receiving condition caused by heat generation. However, laminated-structure batteries, particularly on-vehicle batteries, due to their large size, cause a large temperature difference between the lamination inside (inner side in the direction of lamination) and the outside (outer side in the direction of lamination), in contrast with small-size batteries of winding structure, etc. generally used for cellular phones and mobile personal computers. Therefore, the battery structure of the present embodiment is effectively capable of becoming a means for a cathode active material having no temperature dependency.

On the other hand, of the cathode active materials shown in Fig. 3, in Li(Ni, Co, Al)O₂, which has been formed by partly replacing Ni with Al, Co, etc., and lithium nickel-cobalt-manganese oxide Li(Ni, Co, Mn)O₂, the change (increase) of the capacity fluctuation percentage is in direct proportion to the change (increase) of the cell temperature. Such cathode active material having temperature dependency has a layered rock-salt structure, and the battery characteristics are accompanied with a large unevenness under a heat-receiving condition caused by heat generation at the time of charge and discharge. As a result, the temperature difference is more actualized by the addition of the temperature difference due to the battery temperature dependency between the inner side and the outer side too, in addition to a large temperature difference due to the lamination structure between the lamination inside (inner side in the direction of lamination) and the outside (end portion; outer side in the direction of lamination). Therefore, the structure of the present embodiment is above all effectively capable of becoming a means for a cathode active material having temperature dependency. Furthermore, cathode active materials high in energy density, such as Li(Ni, Co, Al)O₂, Li(Ni, Co, Mn)O₂, LiNiO₂, and Li₂MnO3, tend to make batteries have high capacities. In the case of using them for on-vehicle batteries, they are advantageous in terms of being capable of extending the running distance per one charge.

Although the average particle size of the cathode active material is not particularly limited, but it is preferably 1-25 µm from the viewpoint of a higher output.

The amount of the cathode active material is not particularly limited. It is in a range of preferably 50-99 mass %, more preferably 70-97 %, still more preferably 80-96 %, relative to the total amount of the raw materials for forming the cathode active material layer.

### (2b) Anode active material

The anode active material has a composition capable of releasing lithium ions at the time of discharge and occluding lithium ions at the time of charge. The anode active material is not particularly limited, as long as it is one capable of reversibly occuluding and releasing lithium. As examples of the anode active material, it is possible to preferably cite metals, such as Si and Sn, or metal oxides, such as TiO, Ti₂O₃, TiO₂, or SiO₂, SiO and SnO₂, complex oxides of lithium and transition metals, such as Li_{4/3}Ti_{5/3}O₄ or Li₇MnN, Li-Pb series alloys, Li-Al series alloys, Li, or carbon materials, such as natural graphite, artificial graphite, carbon black, activated carbon, carbon fiber, coke, soft carbon, or hard carbon. Of these, the use of an element that forms an alloy with lithium makes it possible to obtain a battery of a high capacity and superior output characteristics, which has a higher energy density as compared with conventional carbon series materials. The anode active material may be used alone, or may be used in the form of a mixture of at least two types. Although the element for forming an alloy with lithium is not limited to the following, but it is possible to specifically cite Si, Ge, Sn, Pb, Al, In, Zn, H, Ca, Sr, Ba, Ru, Rh, Ir, Pd, Pt, Ag, Au, Cd, Hg, Ga, Tl, C, N, Sb, Bi, O, S, Se, Te, Cl, etc.

Of the above active materials, it is preferable to contain a carbon material and/or at least one element selected from the group consisting of Si, Ge, Sn, Pb, Al, In, and Zn. It is more preferable to contain a carbon material, Si, or Sn element. Of carbon materials, it is more preferable to use graphite that is lower than lithium in discharge potential.

When using the the above anode active material as an anode, the anode active material layer containing an anode active material may be formed into a plate shape, and may be used as the anode as it is. It is optional to form an anode active material layer containing the above-mentioned anode active material on the surface of the collector to be used as an anode. Although the average particle size of the anode active material particles in the latter configuration is not particularly limited, it is preferably 1-100 µm from the viewpoint of higher capacity, reactivity and cycle durability of the anode active material, and more preferably 1-25 µm from the viewpoint of higher output. If it is in such a range, it is possible in the secondary battery to suppress the increase of internal resistance of the battery at the time of charge or discharge under a high output condition and take out a sufficient current. In case that the anode active material is in the form of secondary particles, it is desirable that the average particle size of primary particles constituting the secondary particles is in a range of 10 nm to 1 µm. In the present embodiment, however, it is not necessarily limited to the above range. Although it depends on the production method, it is needless to say that the anode active material is not limited to those turned to secondary particles by aggregation, aggregated, etc. As the particle size of the anode active material and the particle size of the primary particles, it is possible to use the median size obtained by using a laser diffraction method. The shape of the anode active material gains, which can be taken, depends on the type, the production method, etc. For example, it is possible to cite spherical (powdery), platy, needle-like, columnar, square shape, etc., but it is not limited to these. Any shape is usable with no problem. Preferably, it is desirable to suitably select the optimum shape capable of improving battery characteristics such as charge and discharge characteristics.

The amount of the anode active material is not particularly limited. It is preferably 50-99 mass %, more preferably 70-97 %, still more preferably 80-96 %, relative to the total amount of the raw materials for forming the anode active material layer.

### (2b) Conductive assistant

The conductive assistant is an additive to be mixed with to improve conductivity of the active material layer. As the conductive assistant, it is possible to cite carbon powder of acetylene black, carbon black, ketjen black, graphite, etc., various carbon fibers, such as vapor-grown carbon fiber (a trade name of VGCF), expanded graphite, etc. It is, however, needless to say that the conductive assistant is not limited to these. If the active material layer contains a conductive assistant, the electron network in the inside of the active material layer is effectively formed, thereby contributing to the improvement of output characteristics of the battery.

The content of the conductive assistant to be mixed with the cathode active material layer is 1 mass % or greater, preferably 1.5 mass % or greater, still more preferably 2 mass % or greater, relative to the total amount of the raw materials for forming the cathode active material layer. Furthermore, the content of the conductive assistant to be mixed with the cathode active material layer is 10 mass % or less, preferably 5 mass % or less, still more preferably 4 mass % or less, relative to the total amount of the raw materials for forming the cathode active material layer. Electron conductivity of the active material itself is low. The following advantageous effects are shown by defining within the above range the mixing ratio (content) of the conductive assistant in the cathode active material layer, which can reduce electrode resistance by the amount of the conductive assistant. That is, it is possible to show advantageous effects of the present embodiment without interfering with the electrode reaction. Additionally, it is possible to sufficiently guarantee the electron conductivity, suppress lowering of the energy density due to lowering of the electrode density, and by extension try to improve the energy density due to the improvement of the electrode density.

The content of the conductive assistant to be mixed with the anode active material layer depends on the anode active material. Therefore, it cannot unambiguously be defined. In the case of using a carbon material, such as graphite, soft carbon, hard carbon, etc. or a metal material having a superior electron conductivity of the anode active material itself, it is not necessary in particular to contain the conductive assistant in the anode active material layer. Even if containing the conductive assistant, at the most a range of 0.1-1 mass % relative to the total amount of the electrode constituting materials on the anode side will suffice. On the other hand, similar to the cathode active material, it is low in electron conductivity. Therefore, it is possible to reduce the electrode resistance by the amount of the conductive assistant. In the case of using an anode active material such as lithium alloy series anode material, lithium-transition metal complex oxide (e.g., Li₄Ti₅O₁₂), etc., it is desirable that the content is at the same level as the content of the conductive assistant to be mixed with the cathode active material layer. That is, it is desirable that the content of the conductive assistant to be mixed with the anode active material layer is also preferably 1-10 mass %, more preferably 2-8 mass %, still more preferably 3-7 mass %, relative to the total amount of the electrode constituting materials on the anode side.

### (2c) Binder

The binder is added for the purpose of maintaining the electrode structure by binding the structural members in the active material layer with each other or binding the active material layer with the collector. The binder is not particularly limited, as long as it is an insulating material for achieving the above object and is a material not causing a side reaction (oxidation-reduction reaction) at the time of charge and discharge. For example, the following materials can be cited. It is possible to cite thermoplastic polymers, such as polyethylene (PE), polypropylene (PP), polystyrene (PS), polyethylene terephthalate (PET), polyether nitrile (PEN), polyacrylonitrile (PAN), polyimide (PI), polyamide (PA), polyamide imide (PAI), cellulose, carboxymethyl cellulose (CMC), ethylene-vinyl acetate copolymer, polyvinyl chloride (PVC), styrene-butadiene rubber (SBR), isoprene rubber, butadiene rubber, ethylene-propylene rubber, ethylene-propylene-diene copolymer, styrene-butadiene-styrene block copolymer and its hydrogenated product, and styrene-isoprene-styrene block copolymer and its hydrogenated product, fluororesins, such as polyvinylidene fluoride (PVdF), polytetrafluoroethylene (PTFE), tetrafluoroethylene-hexafluoropropylene copolymer (FEP), tetrafluoroethylene-perfluoroalkyl vinyl ether copolymer (PFA), ethylene-tetrafluoroethylene copolymer (ETFE), polychlorotrifluoroethylene (PCTFE), ethylene-chlorotrifluoroethylene copolymer (ECTFE), and polyvinyl fluoride (PVF), vinylidene fluoride series fluororubbers, such as vinylidene fluoride-hexafluoropropylene series fluororubber (VDF-HFP series fluororubber), vinylidene fluoride-hexafluoropropylene-tetrafluoroethylene series fluororubber (VDF-HFP-TFE series fluororubber), vinylidene fluoride-pentafluoropropylene series fluororubber (VDF-PFP series fluororubber), vinylidene fluoride-pentafluoropropylene-tetrafluoroethylene series fluororubber (VDF-PFP-TFE series fluororubber), vinylidene fluoride-perfluoromethyl vinyl ether-tetrafluoroethylene series fluororubber (VDF-PFMVE-TFE series fluororubber), and vinylidene fluoride-chlorotrifluoroethylene series fluororubber (VDC-CTFE series fluororubber), epoxy resins, acrylic resins, such as polymethyl acrylate (PMA) and polymethyl methacrylate (PMMA), aramid, polyvinylidene chloride (PVDC), etc. Of these, it is more preferable to be polyvinylidene fluoride, polyimide, styrene-butadiene rubber, carboxymethyl cellulose, polypropylene, polytetrafluoroethylene, polyacrylonitrile, or polyamide. These preferable binders are superior in heat resistance, very wide in potential window, and stable against both of the cathode potential and the anode potential. Therefore, the use for the active material layer becomes possible. These binders may be used singly, or at least two of them may be used together. It is, however, needless to say that the binder is not limited to these.

The amount of the binder is not particularly limited, as long as it is the amount at which the active material, etc. can be bound. It is preferably 0.5-15 mass %, more preferably 1-10 mass %, relative to the total amount of the raw materials for forming the electrode active material layer.

### (2d) Electrolyte salt (lithium salt)

As the electrolyte salt (lithium salt), it is possible to cite Li(C₂F₅SO₂)₂N, LiPF₆, LiBF₄, LiClO₄, LiAsF₆, LiCF₃SO₃, etc. Furthermore, it is possible to suitably utilize electrolyte salts (lithium salts) used for the after-mentioned electrolyte layer.

### (2e) Ion conductive polymer

As the ion conductive polymer, it is possible to cite, for example, polyethylene oxide (PEO) series and polypropylene oxide (PPO) series polymers. Furthermore, it is possible to suitably utilize electrolyte salts (lithium salts) used for the after-mentioned electrolyte layer.

### (2f) Porous skeleton body used for self-supporting electrode

As the porous skeleton body, nonwoven fabric, woven fabric, metal foamed body (or metal porous body), carbon paper, etc. are desirable. Of these, the nonwoven fabric used for the porous skeleton body is formed by stacking fibers in different directions. A resin material is used in the nonwoven fabric. It is possible to apply a fiber, such as polypropylene, polyethylene, polyethylene terephthalate, cellulose, nylon, EVA resin (ethylene-vinyl acetate copolymer resin), etc. As the porous skeleton body in the forms other than nonwoven fabric, it is possible to cite resin woven fabric (resin porous body having regularity), metal foamed body or metal porous body, carbon paper, etc. Herein, the resin used for the resin woven fabric can be exemplified by polypropylene, polyethylene, polyethylene terephthalate, EVA resin, etc., but is not limited at all to these. The metal foamed body or metal porous body can preferably be exemplified by a metal foamed body or metal porous body of at least one of Cu, Ni, Al and Ti, but it is not limited at all to these. Preferably, it is a metal porous body of at least one of Cu and Al, carbon paper, polypropylene, polyethylene, or a nonwoven fabric made of EVA resin.

The percentage of the porous skeleton body of the skeleton portion occupying the active material layer is in a range of 2 volume % or greater, preferably 7 volume % or greater. On the other hand, the percentage of the porous skeleton body of the skeleton portion occupying the active material layer is in a range of 28 volume % or less, preferably 12 volume % or less. If the percentage of the porous skeleton occupying the active material layer is in the above range, it is superior in terms of not interfering with the electrode reactions.

Porosity (percentage of voids) of the porous skeleton body is preferably 70 % to 98 %, more preferably 90 to 95 %. If it is within the above range, it is superior in terms of effectively obtaining the advantageous effect of the invention.

The void size of the porous skeleton body is desirably around 50 to 100 µm, at which it can sufficiently be filled with an active material used in the world If it is within the above range, it is superior in terms of effectively obtaining the advantageous effect of the invention. That is, if the void size of the porous skeleton body is 100 µm or less, the advantageous effect of the present embodiment is effectively obtained. If the void size is 50 µm or greater, it is superior in terms of being able to suitably select an appropriate active material according to its intended use without limitation in particle size of the active material used.

It suffices that the thickness of the porous skeleton body is less than the thickness of the active material layer. It is normally around 1-120 µm, preferably around 1-20 µm.

The thickness of each active material layer is not particularly limited. From the viewpoint of lowering electron resistance, it is preferable that the thickness of each active material layer is about 1-120 µm.

### (3) Electrolyte layer

The electrolyte layer functions as a partition wall (spacer) between the cathode and the anode. Furthermore, together with this, it also has a function of retaining the electrolyte as a transfer medium of lithium ions between the cathode and the anode upon charge and discharge.

The electrolyte constituting the electrolyte layer is not particularly limited. It is possible to suitably use liquid electrolyte and polymer electrolyte such as polymer gel electrolyte and polymer solid electrolyte. In each case of liquid electrolyte and polymer electrolyte such as polymer gel electrolyte and polymer solid electrolyte, it is desirable to use a separator for the electrolyte layer.

### (3a) Liquid electrolyte

The liquid electrolyte is one in which a lithium salt as the supporting electrolyte is dissolved in solvent. As the solvent, it is possible to cite, for example, dimethyl carbonate (DMC), diethyl carbonate (DEC), dipropyl carbonate (DPC), ethyl methyl carbonate (EMC), methyl propionate (MP), methyl acetate (MA), methyl formate (MF), 4-methyl dioxolane (4MeDOL), dioxolane (DOL), 2-methyl tetrahydrofuran (2MeTHF), tetrahydrofuran (THF), dimethoxyethane (DME), ethylene carbonate (EC), propylene carbonate (PC), butylene carbonate (BC), γ-butyrolactone (GBL), etc. These solvent may be used singly, or a mixture of at least two of them may be used. Furthermore, the supporting electrolyte (lithium salt) is not particularly limited. It is possible to cite inorganic acid anionic salts, such as LiPF₆, LiBF₄, LiClO₄, LiAsF₆, LiTaF₆, LiSbF₆, LiAlCl₄, Li₂B₁₀Cl₁₀, LiI, LiBr, LiCl, LiAlCl, LiHF₂ and LiSCN, and organic acid anionic salts, such as LiCF₃SO₃, Li(CF₃SO₂)₂N, LiBOB (lithium bisoxide borate), and LiBETI (lithium bis(perfluoroethylenesulfonyl imide); written as Li(C₂F₅SO₂)₂N, too). These electrolyte salts may be used singly or in the form of a mixture of at least two of them.

On the other hand, the polymer electrolyte is classified into a gel electrolyte containing an electrolytic solution and a polymer solid electrolyte containing no electrolytic solution.

### (3b) Gel electrolyte

The gel electrolyte has a structure in which the above-mentioned liquid electrolyte has been injected into a matrix polymer containing lithium ion conductivity. As the matrix polymer having lithium ion conductivity, it is possible to cite, for example, a polymer having polyethylene oxide in its main chain or side chain (PEO), a polymer having polypropylene oxide in its main chain or side chain (PPO), polyethylene glycol (PEG), polyacrylonitrile (PAN), polymethacrylic acid ester, polyvinylidene fluoride (PVdF), a copolymer of polyvinylidene fluoride and hexafluoropropylene (PVdF-HFP), polyacrylonitrile (PAN), poly(methylacrylate) (PMA), poly(methylmethacrylate) (PMMA), etc. It is also possible to use mixtures, modified bodies, derivatives, random copolymers, alternating copolymers, graft copolymers, block copolymers, etc. of the above-mentioned polymers, etc. Of these, it is desirable to use PEO, PPO and their copolymers, PVdF, and PVdF-HFP. In such matric polymers, the electrolyte salts, such as lithium salts, can be well dissolved.

### (3c) Polymer solid electrolyte

The polymer solid electrolyte has a structure in which the electrolyte salt (lithium salt) is dissolved in the above-mentioned matrix polymer and contains no organic solvent. Therefore, in case that the electrolyte layer is constituted of a polymer solid electrolyte, there is no fear of liquid leakage from the battery, thereby improving credibility of the battery.

The matrix polymer of polymer gel electrolyte or polymer solid electrolyte can show a superior mechanical strength by forming a crosslinked structure. To form a crosslinked structure, it suffices to conduct a polymerization treatment, such as heat polymerization, ultraviolet polymerization, radiation polymerization and electron beam polymerization, on a polymerizable polymer (e.g., PEO and PPO) for forming the polymer electrolyte by using an appropriate polymerization initiator. The above-mentioned electrolyte may be contained in the active material layer of the electrode.

### (3d) Separator

The separator is not particularly limited, and it is possible to suitably use one publicly known hitherto. It is possible to cite, for example, a separator of a porous sheet made of a polymer or fiber, a nonwoven fabric separator, etc. to absorb and hold the above electrolyte.

As a separator of a porous sheet made of the above polymer or fiber, it is possible to use, for example, a microporous (microporous film). As a specific configuration of a porous sheet of the polymer or fiber, it is possible to cite, for example, polyolefins, such as polyethylene (PE) and polypropylene (PP), a stacked body prepared by stacking these (e.g., a stacked body having a three-layer structure of PP/PE/PP), and a microporous (microporous film) separator made of a hydrocarbon series resin, such as polyimide, aramid, and polyvinylidene fluoride-hexafluoropropylene (PVdF-HFP), glass fiber, etc.

The thickness of the microporous (microporous film) separator depends on its use. Therefore, it cannot unambiguously be defined. As one example is shown, it is desirably 4-60 µm by a single layer or multilayer in the use of motor-driving secondary batteries of electric vehicles (EV), hybrid electric vehicles (HEV), fuel cell vehicles (FCV), etc. It is desirable that the size of micropores of the microporous (microporous film) separator is maximum 1 µm or less (normally a pore size of around tens of nanometers) and that its porosity (percentage of voids) is 20-80 %.

As the above-mentioned nonwoven fabric separator, those publicly known hitherto, such as cotton, rayon, acetate, nylon, polyesters, polyolefins, such as PP and PE, polyimide, and aramid are used singly or in a mixture. Bulk density of the nonwoven fabric should not particularly be limited, as long as it is possible to obtain sufficient battery characteristics by the impregnated polymer gel electrolyte.

It is preferable that porosity (percentage of voids) of the nonwoven fabric separator is 45-90 %. Furthermore, it suffices that the thickness of the nonwoven fabric separator is the same as that of the electrolyte layer. It is preferably 5-200 µm, particularly preferably 10-100 µm. If the thickness is less than 5 µm, retention of the electrolyte becomes inferior. In case that it exceeds 200 µm, resistance increases.

### (4) Adhesive layer

It suffices that the adhesive layer is one that is bonded to each of the cathode or anode and the separator of the electrolyte layer and that is provided for the purpose of preventing short circuit by thermal contraction of the separator.

The material used for the adhesive layer is not particularly limited, as long as it is an insulating material capable of achieving the above object and is a material not generating a side reaction (oxidation-reduction reaction) upon charge and discharge. For example, the following materials can be cited. It is possible to cite olefin series resins, such as polyethylene (PE) and polypropylene (PP), thermoplastic polymers, such as polystyrene (PS), polyethylene terephthalate (PET), polyether nitrile (PEN), polyacrylonitrile (PAN), polyimide (PI), polyamide (PA), polyamide imide (PAI), cellulose, carboxymethyl cellulose (CMC), ethylene-vinyl acetate copolymer, polyvinyl chloride (PVC), styrene-butadiene rubber (SBR), isoprene rubber, butadiene rubber, ethylene-propylene rubber, ethylene-propylene-diene copolymer, styrene-butadiene-styrene block copolymer and its hydrogenated product, and styrene-isoprene-styrene block copolymer and its hydrogenated product, fluororesins, such as polyvinylidene fluoride (PVdF), polyvinylidene fluoride (one having carboxyl groups in partial side chains), polyvinylidene fluoride-hexafluoropropylene (PVdF-HFP), polytetrafluoroethylene (PTFE), tetrafluoroethylene-hexafluoropropylene copolymer (FEP), tetrafluoroethylene-perfluoroalkyl vinyl ether copolymer (PFA), ethylene-tetrafluoroethylene copolymer (ETFE), polychlorotrifluoroethylene (PCTFE), ethylene-chlorotrifluoroethylene copolymer (ECTFE), and polyvinyl fluoride (PVF), vinylidene fluoride series fluororubbers, such as vinylidene fluoride-hexafluoropropylene series fluororubber (VDF-HFP series fluororubber), vinylidene fluoride-hexafluoropropylene-tetrafluoroethylene series fluororubber (VDF-HFP-TFE series fluororubber), vinylidene fluoride-pentafluoropropylene series fluororubber (VDF-PFP series fluororubber), vinylidene fluoride-pentafluoropropylene-tetrafluoroethylene series fluororubber (VDF-PFP-TFE series fluororubber), vinylidene fluoride-perfluoromethyl vinyl ether-tetrafluoroethylene series fluororubber (VDF-PFMVE-TFE series fluororubber), and vinylidene fluoride-chlorotrifluoroethylene series fluororubber (VDC-CTFE series fluororubber), epoxy resins, (meth)acrylic resins, such as polymethyl acrylate (PMA) and polymethyl methacrylate (PMMA), aramid, polyvinylidene chloride (PVDC), etc. Of these, it is more preferable to be polyvinylidene fluoride, polyimide, styrene-butadiene rubber, carboxymethyl cellulose, polypropylene, polytetrafluoroethylene, polyacrylonitrile, or polyamide. These preferable materials used for the adhesive layer are superior in heat resistance, very wide in potential window, and stable against both of the cathode potential and the anode potential. Therefore, the use for the adhesive layer becomes possible. These materials used for the adhesive layer may be used singly, or at least two of them may be used together. It is, however, needless to say that the material used for the adhesive layer is not limited to these. Of these, for example, polyvinylidene fluoride (PVdF), (meth)acrylic resins, olefin series resins, etc. are strong against potential of each of the cathode side and the anode side. Therefore, they are applicable to each of them. Furthermore, since SBR etc. are strong against the anode potential, it is preferable to use them on the anode side. Furthermore, since PTFE, etc. are strong against the cathode potential, it is preferable to use them on the cathode side.

It is desirable to make the thickness of the adhesive layer as thin as possible within a range within which the above object is achievable, in terms of preventing the diffusion distance of Li ions from becoming long and contributing to making the battery light in weight. From such viewpoint, although the thickness of the adhesive layer depends on the configuration of the adhesive layer, it is a range of 0.1-5 µm, preferably 1-2 µm, in case that the adhesive layer exists on the entire surface of the separator and the electrode. If the thickness of the adhesive layer is 0.1 µm or greater, the production becomes easy. Therefore, it is preferable. If the thickness of the adhesive layer is 5 µm or less, there is a low risk to have an adverse effect on the load characteristics of the battery. Therefore, it is preferable.

Furthermore, in case that the adhesive portion (adhesive layer) exists in the form of strips or in the form of dots on the entire surface of the separator and the electrode, the thickness of the adhesive layer is a range of 0.1-5 µm, preferably 1-2 µm, in case that the adhesive layer exists on the entire surface of the separator and the electrode. If the thickness of the adhesive layer is 0.1 µm or greater, the production becomes easy. Therefore, it is preferable. If the thickness of the adhesive layer is 5 µm or less, there is a low risk to have an adverse effect on the load characteristics of the battery. Therefore, it is preferable.

Since there is a possibility that the adhesive layer is brittle and thereby is not neatly peeled off, it is possible to measure the thickness of the adhesive layer from a sectional image of SEM (scanning electron microscope) after disassembling the battery and exposing a section.

Although porosity (hereinafter, referred to as percentage of voids, too) of the adhesive layer depends on configuration of the adhesive layer, it is 60 % or greater, preferably 60-90 %, in case that the adhesive layer exists on the entire surface of the separator and the electrode, or in case that the adhesive portion (adhesive layer) exists thereon in the form of strips or in the form of dots. Making it 60 % or greater is superior in terms of not preventing Li ions from diffusion.

In the case that the adhesive portion is formed in the form of dots and that the percentage of the adhesive portion is very small, it is better that percentage of voids of the adhesive portion (adhesive layer) is small. It is 10 % or less, preferably 0 %. This is because a non-adhesive portion with a large percentage effectively functions as a new electrolytic solution retaining portion. It suffices to suitably determine percentage of the resin portion in view of adhesion and battery performance in case that percentage of the resin portion is very small.

Configuration of the adhesive layer will do as long as it can achieve the object. For example, (i) the adhesive layer may exist on the entire surface of the separator and the electrode. In this case, it is necessary that the adhesive portion is a porous layer to have a liquid retaining space (see the above percentage of voids). Alternatively, (ii) the adhesive layers may exist to have intervals therebetween so that the adhesive portion where the adhesive layer exists and the non-adhesive portion where the adhesive layer does not exists are formed on the surface of the separator and the electrode. It is desirable that the adhesive portions are arranged to keep uniformity on the surface of the separator and the electrode. In the case of the above (ii), the non-adhesive portion effectively functions as a liquid retaining space. Therefore, the adhesive portion (adhesive layer) may be a porous layer having a liquid retaining space. Alternatively, it may be non-porous one (that is, porosity (percentage of voids) is 0 %) where the liquid retaining space does not exist. In particular, in the case of forming the adhesive layer in the form of dots (that is, in case that percentage of the adhesive portion is very small), it is better to make the adhesive portion non-porous (that is, porosity (percentage of voids) is 0 %) where the liquid retaining space does not exist.

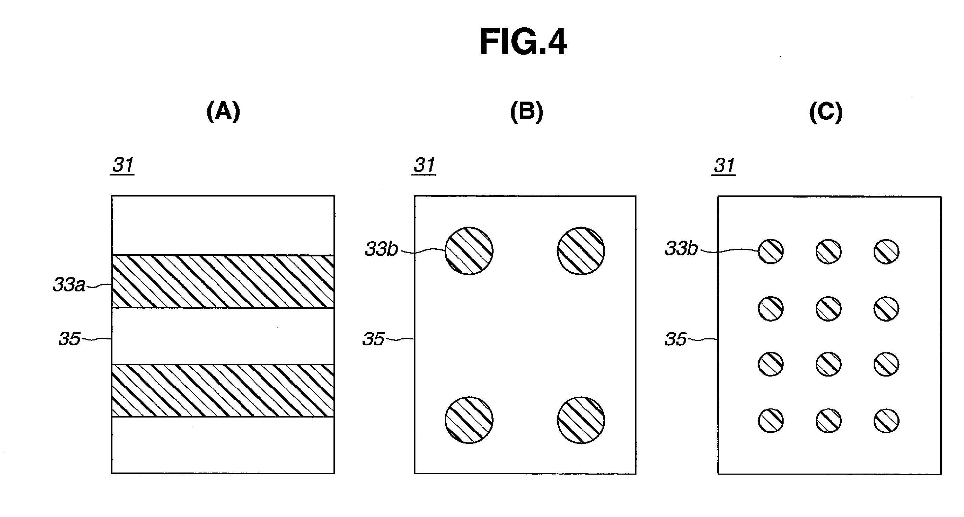

Fig. 4A is a plan view showing a condition in which an adhesive portion in the form of stripes has been formed on the surface of the electrode. Figs. 4B and 4C are plan views each showing a condition in which an adhesive portion in the form of dots has been formed on the surface of the electrode.

Specifically, as shown in (iia) Fig. 4A, adhesive layers (33a) may exist to have intervals therebetween so that adhesive layers 33a in the form of strips and the non-adhesive portion 35 between strip (33a) and strip (33a) are formed on the surface 31 of the separator and the electrode. As shown in (iib) Figs. 4B and 4C, adhesive layers (33b) may exist in the form of dots to have intervals so that adhesive portions 33b in the form of dots and the non-adhesive portion 35 between dot (33b) and dot (33b) are formed on the surface 31 of the separator and the electrode. As an example of (iib), (b1) the adhesive layers may exist to have intervals so that adhesive portions 33b in the form of dots exist at only for corners of the surface 31 of the separator and the electrode and that non-adhesive portion 35 is formed on the surface 31 of the separator and the electrode except dots (adhesive portions 33b) (Fig. 4B). Alternatively, (b2) the adhesive layers may exist to have intervals so that adhesive portions 33b in the form of dots exist on the surface 31 of the separator and the electrode to keep uniformity and that non-adhesive portion 35 is formed on the surface 31 of the separator and the electrode between dot (33b) and dot (33b). For example, the adhesive layers may exist to have intervals so that adhesive portions 33b in the form of dots of 12 points in total (3 points broad x 4 points long) exist at regular intervals on the surface 31 of the separator and the electrode and that non-adhesive portion 35 is formed on the surface 31 of the separator and the electrode except 12 dots (adhesive portions 33b) (Fig. 4C). It is, however, not limited at all to these configurations. Any other configurations will do, as long as these can achieve the above object, such as grid pattern, diamond-shape grid pattern, strip form, ringlike or polygonal pattern such as continuous or discontinuous circles and ovals, wave pattern, semicircular pattern, indeterminate pattern, etc.

Furthermore, it is preferable that softening point of the adhesive layer is lower than that of the separator. This is superior in terms of being able to have a sufficient adhesion by making the surface of the adhesive layer soft while keeping the shape of the separator. From such viewpoint, it is desirable that softening point of the adhesive layer on the center side in the direction of lamination, which is the lowest softening point, is lower than softening point of the separator. Specifically, it is preferable that softening point of the adhesive layer on the center side in the direction of lamination, which is the lowest softening point, is made to be lower than that of the separator by 5-10 °C.

Herein, it is possible to determine each of softening point temperature of the adhesive layer and softening point temperature of the separator by JIS K7206 as Vicat Softening Temperature (VST). As summary of JIS K7206 is explained, a test piece having prescribed dimensions is put into a heating bath, and temperature of the bath is increased in a condition in which an edge surface having a certain cross-section (1 mm² in JIS K7206) is pressed against the center portion. Temperature when the edge surface sink into the test piece until a certain depth is defined as Vicat Softening Temperature (unit: °C).

The formation of the adhesive layer is conducted by previously applying onto the surface of the separator an adhesive slurry (porosity of the adhesive layer is adjustable by changing concentration), which has been prepared by dissolving an adhesion material for forming the adhesion layer in a suitable solvent, and then drying to have desired thickness and shape (the entire surface, in the form of stripes, in the form of dots, etc.). With this, it is possible to integrate the separator and the adhesive layer with each other (referred to as adhesive separator). In the case of forming the adhesive layer on the cathode or the anode, the advantageous effect of the present embodiment is the same in either case. In case that the electrodes have different sizes, it may be advantageous to form the same on the side of a larger size electrode (normally on the side of the anode). This is because the opposed electrodes are not brought into contact with each other until the separator having the same size as that of the larger size electrode becomes smaller than a smaller size electrode by thermal contraction. Similar to a normal separator, this adhesive separator is sandwiched between the cathode and the anode to form power generation element 21. Then, power generation element 21 is subjected to hot pressing in vertical direction by a hot pressing apparatus to soften the surface portion of the adhesive layer (adhesive portion) of the adhesive separator. This creates adhesion property to result in bonding with the electrodes, too. With this, it is possible to form an adhesion layer achieving an adhesion between the electrode and the separator. It is optional to make a resin electrode (one prepared by integrating the electrode and the adhesive layer with each other) by previously applying an adhesive slurry onto the electrode (cathode or anode) side. Then, similarly, power generation element 21 is formed, followed by hot pressing. With this, it is also possible to form an adhesive layer achieving an adhesion between the electrode and the separator.

### (5) Collecting plate (collecting tab; outer lead)

In a lithium ion secondary battery, for the purpose of taking the electric current out of the battery, it is optional to use collecting plates (collecting tabs) 25, 27. Collecting plates (collecting tabs) 25, 27 are electrically connected with collectors 11, 12 and are taken out of a laminated film, etc. as cladding 29.

The material for constituting collecting plates 25, 27 is not particularly limited. It is possible to use a publicly known, highly conductive material that has conventionally been used as a collecting plate for lithium ion secondary batteries. As the material constituting the collecting plate, metal materials, such as aluminum, copper, titanium, nickel, stainless steel (SUS), and alloys of these, are preferable. From the viewpoints of light weight, corrosion resistance and high conductivity, aluminum and copper are more preferable, and aluminum is particularly preferable. It is optional to use the same material or different materials for cathode collecting plate (cathode tab) 25 and anode collecting plate (anode tab) 27.

### (5a) Electrodes (cathode and anode) terminal lead (inner lead)

In laminated-structure battery 10 shown in Fig. 1, the collectors may be electrically connected with the collecting plates (collecting tabs) via an anode terminal lead and a cathode terminal lead (not shown in the drawings), respectively. It is also possible to extend a part of the collector to be like an electrode terminal lead (inner lead), thereby making a direct electrical connection with the collecting plate (collecting tab). Therefore, the electrode terminal lead can suitably be used according to need and can be called an optional constitutional member.

As to the material of the anode and cathode terminal leads, it is possible to use a lead used in publicly-known, laminated secondary batteries. It is preferable to cover a part taken out of the battery cladding, with a heat resistant, insulating, heat shrinkable tube, so as not to affect the product (for example, automotive parts, particularly electronic equipment), for example, by short circuit by a contact with peripheral equipment, wiring, etc.

### (6) Battery cladding

As the battery cladding, it is possible to use a metal can casing publicly known hitherto. Besides, it is optional to use laminated film 29 shown in Fig. 1 as the cladding to enclose power generation element 21. The laminated film can be constituted of, for example, a three-layer structure prepared by laminating polypropylene, aluminum and nylon in this order. By using such laminated film, it is possible to easily conduct the opening of the cladding, the addition of a capacity recovery material, and resealing of the cladding. A laminated film cladding is desirable from the viewpoints of being superior in higher output and cooling capacity and being preferably usable for batteries for large-size equipment for EV and HEV

The above-mentioned laminated-structure lithium ion secondary battery 10 can be produced by a production method publicly known hitherto.

### [Appearance structure of lithium ion secondary battery]

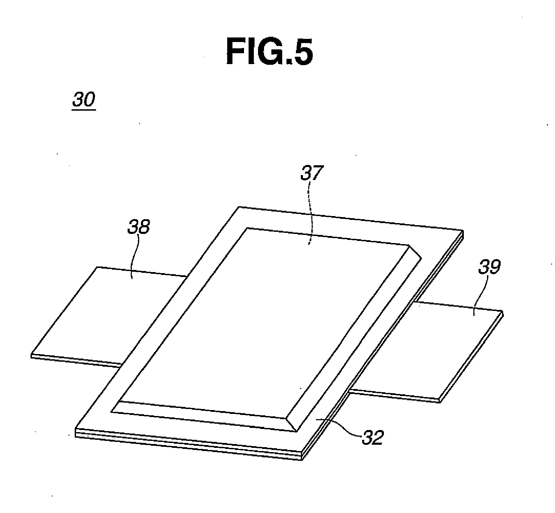

Fig. 5 is a perspective view showing an external appearance of a flat, laminated (laminated structure) lithium ion secondary battery as a typical embodiment of laminated-structure batteries.

As shown in Fig. 5, flat, laminated lithium ion secondary battery 30 has a rectangular flat shape. Cathode tab 38 and anode tab 39 for taking out the power are drawn from the both sides. Power generation element 37 is wrapped in battery cladding 52 of lithium ion secondary battery 30, and its periphery is heat sealed. Power generation element 37 is sealed under condition that cathode tab 38 and anode tab 39 are drawn outward. Herein, power generation element 37 corresponds to power generation element 21 of the above-explained, laminated lithium ion secondary battery (laminated-structure battery) 10 shown in Fig. 1. Power generation element 37 is one prepared by laminating a plurality of single battery layers (single cells) 19 constituted of a cathode, an electrolyte layer and an anode.

Furthermore, drawing of tabs 38, 39 shown in Fig. 5 is not particularly limited. It is optional to draw cathode tab 38 and anode tab 39 from the same side. It is optional to respectively divide cathode tab 38 and anode tab 39 into a plurality of those and draw them from each side. Thus, it is not limited to that shown in Fig. 5.

The above-mentioned lithium ion secondary battery (laminated-structure battery) 10 can preferably be used for a vehicle-driving power source and a supplementary power source, which are required to have high volume energy density and high volume output density as high capacity power sources of electric vehicles, hybrid electric vehicles, fuel cell vehicles, hybrid fuel cell vehicles, etc.

In the above embodiment, a laminated lithium ion secondary battery has been shown as an example of the laminated-structure battery. It is, however, not limited to this. It can be applied to other types of secondary batteries and primary batteries, too.

The above-explained laminated-structure battery of the present embodiment has the following advantageous effect.

In battery 10 of the present embodiment, the A/C ratio is made to be higher as being closer to the center portion in the direction of lamination by making the A/C ratio higher in the center portion than in the end portion in the direction of lamination. Therefore, the difference between the effective A/C ratios at the center portion and the end portion in the direction of lamination is reduced. With this, it is possible to obtain an even output. As a result, it is possible to prevent the performance deterioration at an early stage and improve durability of the battery.

The following is the advantageous effect by a specific structure (means) for making the A/C ratio higher in the center portion than in the end portion in the direction of lamination.
(1) The anode charge and discharge capacity is made higher as being closer to the center portion. Therefore, the difference between the effective A/C ratios at the center portion and the end portion in the direction of lamination is reduced. With this, it is possible to obtain an even output. As a result, it is possible to obtain the above task (object) and advantageous effect, such as being able to prevent the performance deterioration at an early stage and being able to improve durability of the battery.
(2) The cathode charge and discharge capacity is made lower as being closer to the center portion. Therefore, the difference between the effective A/C ratios at the center portion and the end portion in the direction of lamination is reduced. With this, it is possible to obtain an even output. As a result, it is possible to obtain the above task (object) and advantageous effect, such as being able to prevent the performance deterioration at an early stage and being able to improve durability of the battery.
(3) The proportion of the anode active material's mass per unit area is made to be higher as being closer to the center. Therefore, the difference between the effective A/C ratios at the center portion and the end portion in the direction of lamination is reduced. With this, it is possible to obtain an even output. As a result, it is possible to obtain the above task (object) and advantageous effect, such as being able to prevent the performance deterioration at an early stage and being able to improve durability of the battery.
(4) The proportion of the cathode active material's mass per unit area is made to be higher as being closer to the center. Therefore, the difference between the effective A/C ratios at the center portion and the end portion in the direction of lamination is reduced. With this, it is possible to obtain an even output. As a result, it is possible to obtain the above task (object) and advantageous effect, such as being able to prevent the performance deterioration at an early stage and being able to improve durability of the battery.
(5) The anode electrode density is made to be higher as being closer to the center portion. Therefore, it is possible to make the cell thickness equal as a whole even if applying a greater amount of the anode active material. Furthermore, the difference between the effective A/C ratios at the center portion and the end portion in the direction of lamination is reduced. With this, it is possible to obtain an even output. As a result, it is possible to obtain the above task (object) and advantageous effect, such as being able to prevent the performance deterioration at an early stage and being able to improve durability of the battery.
(5) The cathode electrode density is made to be higher as being closer to the end portion. Therefore, it is possible to make the cell thickness equal as a whole even if applying a greater amount of the cathode active material. Furthermore, the difference between the effective A/C ratios at the center portion and the end portion in the direction of lamination is reduced. With this, it is possible to obtain an even output. As a result, it is possible to obtain the above task (object) and advantageous effect, such as being able to prevent the performance deterioration at an early stage and being able to improve durability of the battery.

In the above items (5) and (6), the opposed electrodes in each lamination are made to be equal in energy density (thickness). Therefore, it is possible to make the cell volume equal even if applying a greater amount of the cathode or anode active material.

### EXAMPLES

The present invention is explained in more detail by using the following examples and comparative examples, but is not limited to only the following examples.

### (Example 1)

### 1. Preparation of Cathode A

A cathode slurry was obtained by mixing together Li(Ni_{0.8}Co_{0.1}Al_{0.1})O₂ (average particle size: 10 µm) as a cathode active material, acetylene black as a conductive assistant, and polyvinylidene fluoride (PVDF) as a binder by a desired mass proportion.

While conducting viscosity adjustment of the slurry using NMP (N-methyl-2-pyrrolidone), a coating was conducted on both surfaces of an aluminum foil as the cathode collector such that the amount of the active material per unit area became 16 mg/cm² on one surface. After a sufficient drying, the thickness of the cathode (the total thickness of the cathode collector and the cathode active material layer (both surfaces)) was adjusted by using a roll press machine. Herein, the thickness of the Cathode A was 120 µm.

### 2. Preparation of Anodes A to C

An anode slurry was obtained by mixing together as an anode active material a mixture of a natural graphite (average particle size: 20 µm) and a natural graphite (average particle size: 20 µm) with an amorphous coating as shown in Table 1, and polyvinylidene fluoride (PVDF) as a binder by a desired mass proportion.

While conducting viscosity adjustment of the slurry using NMP (N-methyl-2-pyrrolidone), a coating was conducted on both surfaces of a copper foil as the anode collector such that the amount of the active material per unit area became 9.5 mg/cm² on one surface. After a sufficient drying, the thickness of the anode (the total thickness of the anode collector and the anode active material layer (both surfaces)) was adjusted by using a roll press machine. Herein, the thicknesses of Anodes A, B and C were each 136.3 µm.

**[Table 1]**

| Mixing proportion of natural graphite (with no amorphous coating) and natural graphite (with amorphous coating) of Anodes A to C | | | |
|---|---|---|---|
| | Anode A | Anode B | Anode C |
| Natural graphite (with no amorphous coating) (mass %) | 50 | 20 | 0 |
| Natural graphite (with amorphous coating) (mass %) | 50 | 80 | 100 |

### 3. Preparation of a separator plus adhesive layer A (hereinafter also referred to simply as Adhesive Separator A)

On the entire surface of a laminated microporous film of polyethylene and polypropylene, there was formed a polyvinylidene fluoride layer (melting point: 175 °C, softening point temperature: 110 °C) as the adhesive layer by a thickness of 2 µm (porosity: 65 %).

### 4. Preparation of single battery layer (singe cell; a condition in which the electrolyte has not yet been introduced)

Five layers of single battery layers (single cells; not including the electrolyte) were prepared by combining structural members (not including the electrolyte) of single battery layers (single cells) formed of Cathode A, Anodes A to C, and Adhesive Separator A of the above items 1-3.

As to the single battery layers (single cells) of five layers, the lamination positions (lamination numbers) of respective single cells, when five layer lamination was used for the laminated-structure battery, were named 1 to 5 in order from the bottom step.

Unless particularly stated, in the present example and the following examples and comparative examples, each structural member and composition of the single battery layer (single cell) were as follows (hereinafter, these values are also referred to as standard values).
Cathode; cathode active material : conductive assistant : binder (mass proportion) = 94 : 3.5 : 2.5. Porosity of the cathode active material layer is 30 %. The thickness of the aluminum foil of the cathode collector is 20 µm.
· Anode; anode active material : binder (mass proportion) = 96 : 4. Porosity of the anode active material is 25 %, and the thickness of the copper foil of the anode collector is 10 µm.
· Separator; the thickness of the laminated microporous film of polyethylene and polypropylene is 25 µm. Porosity is 55%. Softening point temperature is 120 °C.
· Electrolyte; one prepared by adding 1 M LiPF₆-containing, mixed solution of EC and DEC (EC : DEC = 5 : 5 by molar ratio) was used.

Combination of the electrodes (cathode and anode) of single battery layers (single cells) of five layers was made as shown in Table 2. In each of the single battery layers, there was used Adhesive Separator A.

**[Table 2]**

| Lamination number | 1 | 2 | 3 | 4 | 5 |
|---|---|---|---|---|---|
| Cathode | A | A | A | A | A |
| Anode | A | B | C | B | A |
| A/C ratio | 1.1 | 1.12 | 1.15 | 1.12 | 1.1 |

The A/C ratio in the above table represents the discharge A/C ratio. Such A/C ratio was determined from the discharge capacities of the cathode and the anode upon discharge, when conducted charge and discharge between 4.25 V to 3.0 V at 0.2 C rate on the cathode (0.05 C on the anode) under a storage at 25 °C by assembling a cell to have Li as the counter electrode relative to each of the cathode and anode. In the A/C ratios of the following examples and comparative examples too, the discharge A/C ratio was determined in a way similar to the above.

Adhesive Separator A used in each single battery layer was arranged so that the adhesive layer side was bonded to the surface of the anode (active material layer) in each single battery layer (single cell). Bonding (heat seal) was conducted by hot pressing (heat pressing) upon making a laminated-structure battery explained by the procedure of the following item 5.

### 5. Preparation of laminated-structure battery

Along with the procedure of the above item 4, a power generation element was prepared by laminating single battery layers (single cells) of five layers prepared by cutting (upon this, the tabs were left by not cutting the same) Cathode A, Anodes A-C and Adhesive Separator A into a square 20 cm long and broad, by five layers in the lamination order of Table 2. Then, a power generation element (laminated body) (see Fig. 1) of a parallel type (internal parallel connection type) laminated-structure battery was stacked (assembled) by connecting together the tabs (collecting tabs each formed by extending a part of the collector; the thickness of the collecting tabs was the same as that of the collector) of the respective single battery layers laminated. Then, a power generation element (laminated body) was prepared by adding a constant pressure load with heating (by hot pressing) using a heat pressing apparatus (pressing jig) in the vertical direction of the power generation element (laminated body) in order to conduct a heat seal of the adhesive layers of Adhesive Separator A. Upon this, the load was set at 10 MPa, the temperature of the heat pressing apparatus (pressing jig) 95 °C, and the pressing time 5 minutes.

A laminated-structure battery was prepared by putting the power generation element (laminated body) prepared, into an aluminum laminate cladding, injecting a desired electrolyte (see composition of the above standard values), and then vacuum sealing.

### (Example 2)

### 1. Preparation of Cathodes B to D

A cathode slurry was obtained by mixing together Li(NiₓCo_{y}Al_{z})O₂ (average particle size: 10 µm) as a cathode active material having a compositional proportion shown in Table 3, acetylene black as a conductive assistant, and polyvinylidene fluoride (PVDF) as a binder by a desired mass proportion (the above standard values).

While conducting viscosity adjustment of the slurry using NMP (N-methyl-2-pyrrolidone), a coating was conducted on both surfaces of an aluminum foil as the cathode collector such that the amount of the active material per unit area became 15.5 mg/cm² on one surface. After a sufficient drying, the thickness of the cathode (the total thickness of the cathode collector and the cathode active material layer (both surfaces)) was adjusted by using a roll press machine. Herein, the thicknesses of the Cathodes B to D were each 117 µm.

**[Table 3]**

| Compositional proportion of cathode active material Li(NiₓCo_{y}Al_{z})O₂ of Cathodes B to D | | | |
|---|---|---|---|
| | Compositional Proportion | | |
| | Cathode B | Cathode C | Cathode D |
| x (Ni compositional proportion) | 0.8 | 0.7 | 0.65 |
| y (Co compositional proportion) | 0.15 | 0.2 | 0.2 |
| z (Al compositional proportion) | 0.05 | 0.1 | 0.15 |

### 2. Preparation of Anode D

An anode slurry was obtained by mixing together a natural graphite (average particle size: 20 µm) as an anode active material and polyvinylidene fluoride (PVDF) as a binder by a desired mass proportion (the above standard values).

While conducting viscosity adjustment of the slurry using NMP (N-methyl-2-pyrrolidone), a coating was conducted on both surfaces of a copper foil as the anode collector such that the amount of the active material per unit area became 9.5 mg/cm² on one surface. After a sufficient drying, the thickness of the anode (the total thickness of the anode collector and the anode active material layer (both surfaces)) was adjusted by using a roll press machine. Herein, the thickness of Anode D was each 136.3 µm.

### 3. Preparation of single battery layer (singe cell; a condition in which the electrolyte has not yet been introduced)

Five layers of single battery layers (single cells; not including the electrolyte) were prepared by combining structural members (not including the electrolyte) of single battery layers (single cell) formed of Cathodes B to D of the above items 1-2, Anode D, and Adhesive Separator A of Example 1.

As to the single battery layers (single cells) of five layers, the lamination positions (lamination numbers) of respective single cells, when five layer lamination was used for the laminated-structure battery, were named 1 to 5 in order from the bottom step.

Unless particularly stated, each structural member and composition of the single battery layer (single cell) were similar to the standard values of "4. Preparation of single battery layer (singe cell; a condition in which the electrolyte has not yet been introduced)".

Combination of the electrodes (cathode and anode) of single battery layers (single cells) of five layers was made as shown in Table 4. In each of the single battery layers, there was used Adhesive Separator A.

**[Table 4]**

| Lamination number | 1 | 2 | 3 | 4 | 5 |
|---|---|---|---|---|---|
| Cathode | B | C | D | C | B |
| Anode | D | D | D | D | D |
| A/C ratio | 1.1 | 1.12 | 1.15 | 1.12 | 1.1 |

Adhesive Separator A used in each single battery layer was arranged so that the adhesive layer side was bonded to the surface of the anode (active material layer) in each single battery layer (single cell). Bonding (heat seal) was conducted by hot pressing (heat pressing) upon making a laminated-structure battery explained by the procedure of the following item 4.

### 4. Preparation of laminated-structure battery

Along with the procedure of the above item 3, a power generation element was prepared by laminating single battery layers (single cells) of five layers prepared by cutting (upon this, the tabs were left by not cutting the same) Cathodes B-D, Anode D and Adhesive Separator A into a square 20 cm long and broad, by five layers in the lamination order of Table 4. Then, a power generation element (laminated body) (see Fig. 1) of a parallel type (internal parallel connection type) laminated-structure battery was stacked (assembled) by connecting together the tabs (collecting tabs each formed by extending a part of the collector; the thickness of the collecting tabs was the same as that of the collector) of the respective single battery layers laminated. Then, a power generation element (laminated body) was prepared by adding a constant pressure load with heating (by hot pressing) using a heat pressing apparatus (pressing jig) in the vertical direction of the power generation element (laminated body) in order to conduct a heat seal of the adhesive layers of Adhesive Separator A. Upon this, the load was set at 10 MPa, the temperature of the heat pressing apparatus (pressing jig) 95 °C, and the pressing time 5 minutes.

A laminated-structure battery was prepared by putting the power generation element (laminated body) prepared, into an aluminum laminate cladding, injecting a desired electrolyte (see composition of the above standard values), and then vacuum sealing.

### (Example 3)

### 1. Preparation of Cathode E

A cathode slurry was obtained by mixing together Li(Ni_{0.8}Co_{0.1}Al_{0.1})O₂ (average particle size: 10 µm) as a cathode active material, acetylene black as a conductive assistant binder, and polyvinylidene fluoride (PVDF) as a binder by a desired mass proportion (the above standard values).

While conducting viscosity adjustment of the slurry using NMP (N-methyl-2-pyrrolidone), a coating was conducted on both surfaces of an aluminum foil as the cathode collector such that the amount of the active material per unit area became 16 mg/cm² on one surface. After a sufficient drying, the thickness of the cathode (the total thickness of the cathode collector and the cathode active material layer (both surfaces)) was adjusted by using a roll press machine. Herein, the thickness of the Cathode E was each 120 µm.

### 2. Preparation of Anodes E to G

An anode slurry was obtained by mixing a natural graphite (average particle size: 20 µm) as an anode active material with polyvinylidene fluoride (PVDF) as a binder by a desired mass proportion (the above standard values).

While conducting viscosity adjustment of the slurry using NMP (N-methyl-2-pyrrolidone), a coating was conducted on both surfaces of a copper foil as the anode collector such that the amount of the anode active material per unit area became as shown in Table 5 (mass per unit area of one surface). After a sufficient drying, the thickness of the anode (the total thickness of the anode collector and the anode active material layer (both surfaces)) was adjusted by using a roll press machine. Herein, the thickness of Anode E was 123 µm, the thickness of Anode F was 130 µm, and the thickness of Anode G was 136.3 µm.

**[Table 5]**

| Mass per unit area of Anodes E to G (the amount of anode active material per unit area of both surfaces of Cu foil) | | | |
|---|---|---|---|
| | Anode E | Anode F | Anode G |
| Mass per unit area (mg/cm²) | 8.5 | 9.0 | 9.5 |

### 3. Preparation of single battery layer (singe cell; a condition in which the electrolyte has not yet been introduced)

Five layers of single battery layers (single cells; not including the electrolyte) were prepared by combining structural members (not including the electrolyte) of single battery layers (single cells) formed of Cathode E and Anodes E to G of the above items 1-2, and Adhesive Separator A of Example 1.

As to the single battery layers (single cells) of five layers, the lamination positions (lamination numbers) of respective single cells, when five layer lamination was used for the laminated-structure battery, were named 1 to 5 in order from the bottom step.

Unless particularly stated, each structural member and composition of the single battery layer (single cell) were similar to the standard values of "4. Preparation of single battery layer (singe cell; a condition in which the electrolyte has not yet been introduced)".

Combination of the electrodes (cathode and anode) of single battery layers (single cells) of five layers was made as shown in Table 6. In each of the single battery layers, there was used Adhesive Separator A.

**[Table 6]**

| Lamination number | 1 | 2 | 3 | 4 | 5 |
|---|---|---|---|---|---|
| Cathode | E | E | E | E | E |
| Anode | E | F | G | F | E |
| A/C ratio | 1.1 | 1.12 | 1.15 | 1.12 | 1.1 |

Adhesive Separator A used in each single battery layer was arranged so that the adhesive layer side was bonded to the surface of the anode (active material layer) in each single battery layer (single cell). Bonding (heat seal) was conducted by hot pressing (heat pressing) upon making a laminated-structure battery explained by the procedure of the following item 4.

### 4. Preparation of laminated-structure battery

Along with the procedure of the above item 3, a power generation element was prepared by laminating single battery layers (single cells) of five layers prepared by cutting (upon this, the tabs were left by not cutting the same) Cathode E, Anodes E-G and Adhesive Separator A into a square 20 cm long and broad, by five layers in the lamination order of Table 6. Then, a power generation element (laminated body) (see Fig. 1) of a parallel type (internal parallel connection type) laminated-structure battery was stacked (assembled) by connecting together the tabs (collecting tabs each formed by extending a part of the collector; the thickness of the collecting tabs was the same as that of the collector) of the respective single battery layers laminated. Then, a power generation element (laminated body) was prepared by adding a constant pressure load with heating (by hot pressing) using a heat pressing apparatus (pressing jig) in the vertical direction of the power generation element (laminated body) in order to conduct a heat seal of the adhesive layers of Adhesive Separator A. Upon this, the load was set at 10 MPa, the temperature of the heat pressing apparatus (pressing jig) 95 °C, and the pressing time 5 minutes.

A laminated-structure battery was prepared by putting the power generation element (laminated body) prepared, into an aluminum laminate cladding, injecting a desired electrolyte (see composition of the above standard values), and then vacuum sealing.

### (Example 4)

### 1. Preparation of Cathodes F to H

A cathode slurry was obtained by mixing together Li(Ni_{0.8}Co_{0.1}Al_{0.1})O₂ (average particle size: 10 µm) as a cathode active material, acetylene black as a conductive assistant, and polyvinylidene fluoride (PVDF) as a binder by a desired mass proportion.

While conducting viscosity adjustment of the slurry using NMP (N-methyl-2-pyrrolidone), a coating was conducted on both surfaces of an aluminum foil as the cathode collector as shown in Table 7 (mass per unit area of one surface). After a sufficient drying, the thickness of the cathode (the total thickness of the cathode collector and the cathode active material layer (both surfaces)) was adjusted by using a roll press machine. Herein, the thickness of Cathode F was 120 µm, the thickness of Cathode G was 117 µm, and the thickness of Cathode H was 114 µm.

**[Table 7]**

| Mass per unit area of Cathodes F to H (the amount of the active material per unit area of both surfaces ofAl foil) | | | |
|---|---|---|---|
| | Cathode F | Cathode G | Cathode H |
| Mass per unit area (mg/cm²) | 16.0 | 15.5 | 15.0 |

### 2. Preparation of Anode H

An anode slurry was obtained by mixing a natural graphite (average particle size: 20 µm) as an anode active material with polyvinylidene fluoride (PVDF) as a binder by a desired mass proportion (the above standard values).

While conducting viscosity adjustment of the slurry using NMP (N-methyl-2-pyrrolidone), a coating was conducted on both surfaces of a copper foil as the anode collector such that the amount of the active material per unit area became 9.5 mg/cm² on one surface. After a sufficient drying, the thickness of the anode (the total thickness of the anode collector and the anode active material layer (both surfaces)) was adjusted by using a roll press machine. Herein, the thickness of Anode H was 136.3 µm.

### 3. Preparation of single battery layer (singe cell; a condition in which the electrolyte has not yet been introduced)

Five layers of single battery layers (single cells; not including the electrolyte) were prepared by combining structural members (not including the electrolyte) of single battery layers (single cells) formed of Cathodes F to H and Anode H of the above items 1-2, and Adhesive Separator A of Example 1.

As to the single battery layers (single cells) of five layers, the lamination positions (lamination numbers) of respective single cells, when five layer lamination was used for the laminated-structure battery, were named 1 to 5 in order from the bottom step.

Unless particularly stated, each structural member and composition of the single battery layer (single cell) were similar to the standard values of "4. Preparation of single battery layer (singe cell; a condition in which the electrolyte has not yet been introduced)".

Combination of the electrodes (cathode and anode) of single battery layers (single cells) of five layers was made as shown in Table 8. In each of the single battery layers, there was used Adhesive Separator A.

**[Table 8]**

| Lamination number | 1 | 2 | 3 | 4 | 5 |
|---|---|---|---|---|---|
| Cathode | F | G | H | G | F |
| Anode | H | H | H | H | H |
| A/C ratio | 1.1 | 1.12 | 1.15 | 1.12 | 1.1 |

Adhesive Separator A used in each single battery layer was arranged so that the adhesive layer side was bonded to the surface of the anode (active material layer) in each single battery layer (single cell). Bonding (heat seal) was conducted by hot pressing (heat pressing) upon making a laminated-structure battery explained by the procedure of the following item 4.

### 4. Preparation of laminated-structure battery

Along with the procedure of the above item 3, a power generation element was prepared by laminating single battery layers (single cells) of five layers prepared by cutting (upon this, the tabs were left by not cutting the same) Cathodes F-H, Anode H and Adhesive Separator A into a square 20 cm long and broad, by five layers in the lamination order of Table 8. Then, a power generation element (laminated body) (see Fig. 1) of a parallel type (internal parallel connection type) laminated-structure battery was stacked (assembled) by connecting together the tabs (collecting tabs each formed by extending a part of the collector; the thickness of the collecting tabs was the same as that of the collector) of the respective single battery layers laminated. Then, a power generation element (laminated body) was prepared by adding a constant pressure load with heating (by hot pressing) using a heat pressing apparatus (pressing jig) in the vertical direction of the power generation element (laminated body) in order to conduct a heat seal of the adhesive layers of Adhesive Separator A. Upon this, the load was set at 10 MPa, the temperature of the heat pressing apparatus (pressing jig) 95 °C, and the pressing time 5 minutes.

A laminated-structure battery was prepared by putting the power generation element (laminated body) prepared, into an aluminum laminate cladding, injecting a desired electrolyte (see composition of the above standard values), and then vacuum sealing.

### (Example 5)

### 1. Preparation of Cathode I

A cathode slurry was obtained by mixing together Li(Ni_{0.8}Co_{0.1}Al_{0.1})O₂ (average particle size: 10 µm) as a cathode active material, acetylene black as a conductive assistant, and polyvinylidene fluoride (PVDF) as a binder by a desired mass proportion.

While conducting viscosity adjustment of the slurry using NMP (N-methyl-2-pyrrolidone), a coating was conducted on both surfaces of an aluminum foil as the cathode collector such that the amount of the active material per unit area became 15.5 mg/cm² on one surface. After a sufficient drying, the thickness of the cathode (the total thickness of the cathode collector and the cathode active material layer (both surfaces)) was adjusted by using a roll press machine such that the cathode electrode density (mass of the active material/volume of the active material in the cathode active material layer) became 3.2 g/cm³. Herein, the thickness of the Cathode I was 117 µm.

### 2. Preparation of Anodes I to K

An anode slurry was obtained by mixing a natural graphite (average particle size: 20 µm) as an anode active material with polyvinylidene fluoride (PVDF) as a binder by a desired mass proportion (the above standard values).

While conducting viscosity adjustment of the slurry using NMP (N-methyl-2-pyrrolidone), a coating was conducted on both surfaces of a copper foil as the anode collector such that the amount of the active material per unit area (g/cm²) became as shown in Table 9 (mass per unit area of one surface). After a sufficient drying, the thickness of the anode (the total thickness of the anode collector and the anode active material layer (both surfaces)) was adjusted by using a roll press machine to obtain the respective anode electrode densities (mass of the active material/volume of the active material in the anode active material layer) of Table 9. Herein, the thickness of Anode I was 129.6 µm, the thickness of Anode J was 129.6 µm, and the thickness of Anode K was 129.6 µm.

**[Table 9]**

| Mass per unit area of Anodes I to K (the amount of anode active material per unit area of both surfaces of Cu foil) and anode electrode density (mass of anode active material/volume of anode active material in anode active material layer) | | | |
|---|---|---|---|
| | Anode I | Anode J | Anode K |
| Mass per unit area (mg/cm²) | 8.5 | 9.0 | 9.5 |
| Anode electrode density (g/cm³) | 1.4 | 1.5 | 1.6 |

### 3. Preparation of single battery layer (singe cell; a condition in which the electrolyte has not yet been introduced)

Five layers of single battery layers (single cells; not including the electrolyte) were prepared by combining structural members (not including the electrolyte) of single battery layers (single cells) formed of Cathode I and Anodes I to K of the above items 1-2, and Adhesive Separator A of Example 1.

As to the single battery layers (single cells) of five layers, the lamination positions (lamination numbers) of respective single cells, when five layer lamination was used for the laminated-structure battery, were named 1 to 5 in order from the bottom step.

Unless particularly stated, each structural member and composition of the single battery layer (single cell) were similar to the standard values of "4. Preparation of single battery layer (singe cell; a condition in which the electrolyte has not yet been introduced)".

Combination of the electrodes (cathode and anode) of single battery layers (single cells) of five layers was made as shown in Table 10. In each of the single battery layers, there was used Adhesive Separator A.

**[Table 10]**

| Lamination number | 1 | 2 | 3 | 4 | 5 |
|---|---|---|---|---|---|
| Cathode | I | I | I | I | I |
| Anode | I | J | K | J | I |
| A/C ratio | 1.1 | 1.12 | 1.15 | 1.12 | 1.1 |

Adhesive Separator A used in each single battery layer was arranged so that the adhesive layer side was bonded to the surface of the anode (active material layer) in each single battery layer (single cell). Bonding (heat seal) was conducted by hot pressing (heat pressing) upon making a laminated-structure battery explained by the procedure of the following item 4.

### 4. Preparation of laminated-structure battery

Along with the procedure of the above item 3, a power generation element was prepared by laminating single battery layers (single cells) of five layers prepared by cutting (upon this, the tabs were left by not cutting the same) Cathode I, Anodes I-K and Adhesive Separator A into a square 20 cm long and broad, by five layers in the lamination order of Table 10. Then, a power generation element (laminated body) (see Fig. 1) of a parallel type (internal parallel connection type) laminated-structure battery was stacked (assembled) by connecting together the tabs (collecting tabs each formed by extending a part of the collector; the thickness of the collecting tabs was the same as that of the collector) of the respective single battery layers laminated. Then, a power generation element (laminated body) was prepared by adding a constant pressure load with heating (by hot pressing) using a heat pressing apparatus (pressing jig) in the vertical direction of the power generation element (laminated body) in order to conduct a heat seal of the adhesive layers of Adhesive Separator A. Upon this, the load was set at 10 MPa, the temperature of the heat pressing apparatus (pressing jig) 95 °C, and the pressing time 5 minutes.

A laminated-structure battery was prepared by putting the power generation element (laminated body) prepared, into an aluminum laminate cladding, injecting a desired electrolyte (see composition of the above standard values), and then vacuum sealing.

### (Example 6)

### 1. Preparation of Cathodes J to L

A cathode slurry was obtained by mixing together Li(Ni_{0.8}Co_{0.1}Al_{0.1})O₂ (average particle size: 10 µm) as a cathode active material, acetylene black as a conductive assistant, and polyvinylidene fluoride (PVDF) as a binder by a desired mass proportion.

While conducting viscosity adjustment of the slurry using NMP (N-methyl-2-pyrrolidone), a coating was conducted on both surfaces of an aluminum foil as the cathode collector such that the amount of the active material per unit area became as shown in Table 11 (mass per unit area of one surface). After a sufficient drying, the thickness of the cathode (the total thickness of the cathode collector and the cathode active material layer (both surfaces)) was adjusted by using a roll press machine to obtain the respective cathode electrode densities (mass of the active material/volume of the active material in the cathode active material layer) of Table 11. Herein, the thickness of the Cathode J was 117 µm, the thickness of the Cathode K was 117 µm, and the thickness of the Cathode L was 117 µm.

**[Table 11]**

| Mass per unit area of Cathodes J to L (the amount of cathode active material per unit area of both surfaces of Al foil) and cathode electrode density (mass of cathode active material/volume of cathode active material in cathode active material layer) | | | |
|---|---|---|---|
| | Cathode J | Cathode K | Cathode L |
| Mass per unit area (mg/cm²) | 15 | 15.5 | 16 |
| Cathode electrode density (g/cm³) | 3.1 | 3.2 | 3.3 |

### 2. Preparation of Anode L

An anode slurry was obtained by mixing a natural graphite (average particle size: 20 µm) as an anode active material with polyvinylidene fluoride (PVDF) as a binder by a desired mass proportion (the above standard values).

While conducting viscosity adjustment of the slurry using NMP (N-methyl-2-pyrrolidone), a coating was conducted on both surfaces of a copper foil as the anode collector such that the amount of the active material per unit area became 9.5 mg/cm². After a sufficient drying, the thickness of the anode (the total thickness of the anode collector and the anode active material layer (both surfaces)) was adjusted by using a roll press machine such that the anode electrode density (mass of the active material/volume of the active material in the anode active material layer) became 1.5 g/cm³. Herein, the thickness of Anode L was 136.3 µm.

### 3. Preparation of single battery layer (singe cell; a condition in which the electrolyte has not yet been introduced)

Five layers of single battery layers (single cells; not including the electrolyte) were prepared by combining structural members (not including the electrolyte) of single battery layers (single cells) formed of Cathodes J to L and Anode L of the above items 1-2, and Adhesive Separator A of Example 1.

As to the single battery layers (single cells) of five layers, the lamination positions (lamination numbers) of respective single cells, when five layer lamination was used for the laminated-structure battery, were named 1 to 5 in order from the bottom step.

Unless particularly stated, each structural member and composition of the single battery layer (single cell) were similar to the standard values of "4. Preparation of single battery layer (singe cell; a condition in which the electrolyte has not yet been introduced)".

Combination of the electrodes (cathode and anode) of single battery layers (single cells) of five layers was made as shown in Table 12. In each of the single battery layers, there was used Adhesive Separator A.

**[Table 12]**

| Lamination number | 1 | 2 | 3 | 4 | 5 |
|---|---|---|---|---|---|
| Cathode | J | K | L | K | J |
| Anode | L | L | L | L | L |
| A/C ratio | 1.1 | 1.12 | 1.15 | 1.12 | 1.1 |

Adhesive Separator A used in each single battery layer was arranged so that the adhesive layer side was bonded to the surface of the anode (active material layer) in each single battery layer (single cell). Bonding (heat seal) was conducted by hot pressing (heat pressing) upon making a laminated-structure battery explained by the procedure of the following item 4.

### 4. Preparation of laminated-structure battery

Along with the procedure of the above item 3, a power generation element was prepared by laminating single battery layers (single cells) of five layers prepared by cutting (upon this, the tabs were left by not cutting the same) Cathodes J-K, Anode L and Adhesive Separator A into a square 20 cm long and broad, by five layers in the lamination order of Table 12. Then, a power generation element (laminated body) (see Fig. 1) of a parallel type (internal parallel connection type) laminated-structure battery was stacked (assembled) by connecting together the tabs (collecting tabs each formed by extending a part of the collector; the thickness of the collecting tabs was the same as that of the collector) of the respective single battery layers laminated. Then, a power generation element (laminated body) was prepared by adding a constant pressure load with heating (by hot pressing) using a heat pressing apparatus (pressing jig) in the vertical direction of the power generation element (laminated body) in order to conduct a heat seal of the adhesive layers of Adhesive Separator A. Upon this, the load was set at 10 MPa, the temperature of the heat pressing apparatus (pressing jig) 95 °C, and the pressing time 5 minutes.

A laminated-structure battery was prepared by putting the power generation element (laminated body) prepared, into an aluminum laminate cladding, injecting a desired electrolyte (see composition of the above standard values), and then vacuum sealing.

### (Comparative Examples 1 and 2)

### 1. Preparation of Cathodes M to N

A cathode slurry was obtained by mixing together Li(Ni_{0.8}Co_{0.1}Al_{0.1})O₂ (average particle size: 10 µm) as a cathode active material, acetylene black as a conductive assistant, and polyvinylidene fluoride (PVDF) as a binder by a desired mass proportion.

While conducting viscosity adjustment of the slurry using NMP (N-methyl-2-pyrrolidone), a coating was conducted on both surfaces of an aluminum foil as the cathode collector such that the amount of the active material per unit area became as shown in Table 13 (mass per unit area of one surface). After a sufficient drying, the thickness of the cathode (the total thickness of the cathode collector and the cathode active material layer (both surfaces)) was adjusted by using a roll press machine. Herein, the thickness of the Cathode M was 118.2 µm, and the thickness of the Cathode N was 132.6 µm.

**[Table 13]**

| Mass per unit area of Cathodes M and N (the amount of cathode active material per unit area of both surfaces ofAl foil) | | |
|---|---|---|
| | Cathode M | Cathode N |
| Mass per unit area (mg/cm²) | 15.7 | 18 |

### 2. Preparation of Anodes M to N

An anode slurry was obtained by mixing a natural graphite (average particle size: 20 µm) as an anode active material with polyvinylidene fluoride (PVDF) as a binder by a desired mass proportion (the above standard values).

While conducting viscosity adjustment of the slurry using NMP (N-methyl-2-pyrrolidone), a coating was conducted on both surfaces of a copper foil as the anode collector such that the amount of the active material per unit area became as shown in Table 14 (mass per unit area of one surface). After a sufficient drying, the thickness of the anode (the total thickness of the anode collector and the anode active material layer (both surfaces)) was adjusted. Herein, the thickness of Anode M was 136.3 µm, and the thickness of Anode N was 136.3 µm.

**[Table 14]**

| Mass per unit area of Anodes M and N (the amount of active material per unit area of both surfaces of Cu foil) | | |
|---|---|---|
| | Anode M | Anode N |
| Mass per unit area (mg/cm²) | 19 | 16.5 |

### 3-1. Preparation of single battery layer (singe cell; a condition in which the electrolyte has not yet been introduced) of Comparative Example 1

Five layers of single battery layers (single cells; not including the electrolyte) were prepared by combining structural members (not including the electrolyte) of single battery layers (single cells) formed of Cathode M and Anode M of the above items 1-2, and Adhesive Separator A of Example 1.

As to the single battery layers (single cells) of five layers, the lamination positions (lamination numbers) of respective single cells, when five layer lamination was used for the laminated-structure battery, were named 1 to 5 in order from the bottom step.

Unless particularly stated, each structural member and composition of the single battery layer (single cell) were similar to the standard values of "4. Preparation of single battery layer (singe cell; a condition in which the electrolyte has not yet been introduced)".

Combination of the electrodes (cathode and anode) of single battery layers (single cells) of five layers was made as shown in Table 15. In each of the single battery layers, there was used Adhesive Separator A.

**[Table 15]**

| Lamination number | 1 | 2 | 3 | 4 | 5 |
|---|---|---|---|---|---|
| Cathode | M | M | M | M | M |
| Anode | M | M | M | M | M |
| A/C ratio | 1.15 | 1.15 | 1.15 | 1.15 | 1.15 |

### 3-2. Preparation of single battery layer (singe cell; a condition in which the electrolyte has not yet been introduced) of Comparative Example 2

Five layers of single battery layers (single cells; not including the electrolyte) were prepared by combining structural members (not including the electrolyte) of single battery layers (single cells) formed of Cathode N and Anode N of the above items 1-2, and Adhesive Separator A of Example 1.

As to the single battery layers (single cells) of five layers, the lamination positions (lamination numbers) of respective single cells, when five layer lamination was used for the laminated-structure battery, were named 1 to 5 in order from the bottom step.

Unless particularly stated, each structural member and composition of the single battery layer (single cell) were similar to the standard values of "4. Preparation of single battery layer (singe cell; a condition in which the electrolyte has not yet been introduced)".

Combination of the electrodes (cathode and anode) of single battery layers (single cells) of five layers was made as shown in Table 16. In each of the single battery layers, there was used Adhesive Separator A.

**[Table 16]**

| Lamination number | 1 | 2 | 3 | 4 | 5 |
|---|---|---|---|---|---|
| Cathode | N | N | N | N | N |
| Anode | N | N | N | N | N |
| A/C ratio | 1.0 | 1.0 | 1.0 | 1.0 | 1.0 |

Adhesive Separator A used in each single battery layer of Comparative Examples 1 and 2 was arranged so that the adhesive layer side was bonded to the surface of the anode (active material layer) in each single battery layer (single cell). Bonding (heat seal) was conducted by hot pressing (heat pressing) upon making a laminated-structure battery explained by the procedure of the following item 4.

### 4. Preparation of laminated-structure battery

In Comparative Example 1, along with the procedure of the above item 3, a power generation element was prepared by laminating single battery layers (single cells) of five layers prepared by cutting (upon this, the tabs were left by not cutting the same) Cathode M, Anode M and Adhesive Separator A into a square 20 cm long and broad, by five layers in the lamination order of Table 15.

In Comparative Example 2, along with the procedure of the above item 3, a power generation element was prepared by laminating single battery layers (single cells) of five layers prepared by cutting (upon this, the tabs were left by not cutting the same) Cathode N, Anode N and Adhesive Separator A into a square 20 cm long and broad, by five layers in the lamination order of Table 16.

Then, in both of Comparative Examples 1 and 2, a power generation element (laminated body) (see Fig. 1) of a parallel type (internal parallel connection type) laminated-structure battery was stacked (assembled) by connecting together the tabs (collecting tabs each formed by extending a part of the collector; the thickness of the collecting tabs was the same as that of the collector) of the respective single battery layers laminated. Then, a power generation element (laminated body) was prepared by adding a constant pressure load with heating (by hot pressing) using a heat pressing apparatus (pressing jig) in the vertical direction of the power generation element (laminated body) in order to conduct a heat seal of the adhesive layers of Adhesive Separator A. Upon this, the load was set at 10 MPa, the temperature of the heat pressing apparatus (pressing jig) 95 °C, and the pressing time 5 minutes.

In both of Comparative Examples 1 and 2, a laminated-structure battery was prepared by putting the power generation element (laminated body) prepared, into an aluminum laminate cladding, injecting a desired electrolyte (see composition of the above standard values), and then vacuum sealing.

By using the laminated-structure battery prepared by the above procedure, under a storage at 50 °C, a cycle test (durability test) was conducted. As the cycle condition, it was conducted 500 cycles between 4.2 V to 3.0 V at 1 C rate.

### (Results)

Capacity retention (%) before and after the durability test is shown in the following Table 17.

Capacity retention (%) is defined as discharge capacity at 500^{th} cycle/discharge capacity at 1^{st} cycle x 100. Energy density is defined as [(average cell voltage) x (capacity per unit weight of the active material) x (the amount of the active material)/(cell volume)]. Suppose that energy densities of Examples 5 and 6 and Comparative Example 2 (the same value in each of them) are 100, the proportions of the energy densities of other examples and comparative examples are shown in the following Table 17.

**[Table 17]**

| | Capacity retention (500 cyc) | Energy density |
|---|---|---|
| Example 1 | 83 % | 92 |
| Example 2 | 80 % | 92 |
| Example 3 | 80 % | 93 |
| Example 4 | 81 % | 91 |
| Example 5 | 82 % | 100 |
| Example 6 | 80 % | 100 |
| Com. Ex. 1 | 76 % | 85 |
| Com. Ex. 2 | 74% | 100 |

From the results shown in Table 17, it was possible to confirm that a capacity retention of 77 % or higher (80 % to 83 %) is secured to improve durability by making a gradation so that A/C ratio at the center portion in the direction of lamination is higher than A/C ratio at the end portion. Furthermore, as compared with capacity retentions (74 % and 76 %) of laminated-structure batteries not having a gradation in the direction of lamination in terms of A/C ratio in each single battery layer (single cell) to be laminated like Comparative Examples 1-2, it was possible to confirm that durability improves in laminated-structure batteries of Examples 1-16.

Furthermore, in Examples 5 and 6, it was possible to confirm that a high energy density is kept by having a gradation so that the center portion is higher than the end portion in terms of anode electrode density in the direction of lamination or that the end portion is higher than the center portion in terms of cathode electrode density in the direction of lamination.

### (Method of confirming A/C ratio)

### 1. As to anode capacity

It is possible to determine the mass proportion of the anode active material, the binder, etc., which are structural members of the anode active material layer of each single battery layer (single cell), and the volume of the anode active material by checking an amorphous layer (the active material) on the surface of the anode active material layer by a TEM (transmission electron microscope). By this, for each single battery layer (single cell) in the battery, it is possible to confirm whether or not mass of the anode active material or the anode electrode density is in a gradation.

Cells are assembled by using anode of each single battery layer in the battery obtained by the production step (or disassembling the battery and taking anode out of each single battery layer (single cell)) and using Li for the counter electrode. Next, under a storage of these cells at 25 °C, a charge is conducted at 0.05 C rate (or 1 C rate) until a predetermined upper limit voltage (4.25 V in the case of the above-mentioned cycle test) (until the cell turns into a fully charged condition). With this, it is possible to determine the anode charge capacity (Ah) for each single battery layer (single cell) in the battery. (See the method of determining A/C ratio of Example 1.)

Next, under a storage of the cell at 25°C, a discharge is conducted until a predetermined lower limit voltage (3.0 V in the case of the above-mentioned cycle test) (until reaching a condition in which it is almost impossible to take the cell capacity out). With this, it is possible to determine the anode discharge capacity (Ah) for each single battery layer (single cell) in the battery.

### 2. As to cathode capacity

The compositional proportion of transition metals (for example, Ni, Co and Al in the case of the above-mentioned Examples) in the cathode active material is checked by ICP (inductively coupled plasma emission spectrometry) to determine the volume of the cathode active material per unit weight and the mass of the cathode active material. By this, for each single battery layer (single cell) in the battery, it is possible to confirm whether or not mass of the cathode active material or the cathode electrode density is in a gradation.

Cells are assembled by disassembling the battery and taking cathode out of each single battery layer (single cell)) and using Li for the counter electrode. Next, under a storage at 25 °C, a charge is conducted at 0.2 C rate (or 1 C rate) until a predetermined upper limit voltage (4.25 V in the case of the above-mentioned cycle test) (until the cell turns into a fully charged condition). With this, it is possible to determine the cathode charge capacity (Ah) for each single battery layer (single cell) in the battery.

Next, under a storage of the cell at 25°C, a discharge is conducted until a predetermined lower limit voltage (3.0 V in the case of the above-mentioned cycle test) (until reaching a condition in which it is almost impossible to take the cell capacity out). With this, it is possible to determine the cathode discharge capacity (Ah) for each single battery layer (single cell) in the battery.

Furthermore, as is understood from Tables 2, 4, 6, 8, 10 and 12, in the present embodiment, it suffices that the charge and discharge capacity, the active material's mass per unit area, the electrode density, etc. are in a gradation such that the center portion is higher than the end portion in terms of A/C ratio in the direction of lamination. It is optional to have a stepwise gradation such that A/C ratio changes for every several single cells. For example, in case that single battery layers (single cells) are laminated by five layers, if the value of A/C ratio of the single cells is in the order of A<B<C<D, it contains modes in which A/C ratio changes in order from the end portion as follows. As A/C ratio changes for every single cell, it is optional to have a gradation, like A<B<C>B>A, A<B<D>B>A, A<C<D>C>A, and B<C<D>C>B. Furthermore, as A/C ratio changes for every several single cells, it is optional to have a stepwise gradation, like A=A<B>A=A, A=A<C>A=A, A=A<D>A=A, B=B<C>B=B, B=B<D>B=B, C=C<D>C=C, A<B=B=B>A, A<C=C=C>A, A<D=D=D>A, B<C=C=C>B, B<D=D=D>B, and C<D=D=D>C. It is not limited to these, as long as it is satisfied that the center portion is higher than the end portion in terms of A/C ratio of the single cells.

## Claims

1. In a battery that has at least a cathode, an anode, and an electrolyte layer and that has a laminated structure prepared by laminating at least three layers of single battery layers each prepared by opposing the cathode and the anode to each other with an interposal of the electrolyte layer,
a laminated-structure battery being **characterized by** that, in a direction of lamination of respective single battery layers, a center portion is higher than an end portion in terms of at least one of a ratio of a cathode charge capacity to an anode charge capacity (charge A/C ratio) and a ratio of a cathode discharge capacity to an anode discharge capacity (discharge A/C ratio).

2. The laminated-structure battery as claimed in claim 1, which is **characterized by** that the center portion is higher than the end portion in terms of at least one of the anode charge capacity and the anode discharge capacity in the direction of lamination of respective single battery layers.

3. The laminated-structure battery as claimed in claim 1 or 2, which is **characterized by** that the center portion is lower than the end portion in terms of at least one of the cathode charge capacity and the cathode discharge capacity in the direction of lamination of respective single battery layers.

4. The laminated-structure battery as claimed in any one of claims 1-3, which is **characterized by** that the center portion is higher than the end portion in terms of mass of an anode active material in the direction of lamination of respective single battery layers.

5. The laminated-structure battery as claimed in any one of claims 1-4, which is **characterized by** that the center portion is lower than the end portion in terms of mass of a cathode active material in the direction of lamination of respective single battery layers.

6. The laminated-structure battery as claimed in any one of claims 1-5, which is **characterized by** that the center portion is higher than the end portion in terms of an anode electrode density (mass of an active material/volume of the active material in an anode active material layer) in the direction of lamination of respective single battery layers.

7. The laminated-structure battery as claimed in any one of claims 1-6, which is **characterized by** that the center portion is lower than the end portion in terms of a cathode electrode density (mass of an active material/volume of the active material in a cathode active material layer) in the direction of lamination of respective single battery layers.
